# EUROPÄISCHE PATENTSCHRIFT

(11) **EP 1 966 273 B1**
(45) Veröffentlichungstag und Bekanntmachung des Hinweises auf die Patenterteilung: **25.03.2009**
(21) Anmeldenummer: 06818998.4
(22) Anmeldetag: 07.12.2006
(51) Int. Cl.: C08G 63/183, C11D 3/37, C08G 63/688

(54) **ANIONISCHE SOIL RELEASE POLYMERE**
ANIONIC SOIL RELEASE POLYMERS
POLYMERE ANIONIQUE DETACHANT LES SALISSURES

(30) Priorität: 21.12.2005 DE 102005061058
(43) Veröffentlichungstag der Anmeldung: 10.09.2008
(73) Patentinhaber: Clariant Produkte (Deutschland) GmbH, 65929 Frankfurt am Main (DE)
(72) Erfinder: LANG, Frank-Peter, 65795 Hattersheim (DE); LABORDA, Steve, 63128 Dietzenbach (DE); BORCHERS, Georg, 61231 Bad Nauheim (DE); MORSCHHÄUSER, Roman, 55122 Mainz (DE)
(74) Vertreter: Paczkowski, Marcus
(86) Internationale Anmeldenummer: PCT/EP2006/011756
(87) Internationale Veröffentlichungsnummer: WO 2007/079850

(56) Entgegenhaltungen:
- WO-A-95/02030
- WO-A1-03/012024
- DE-A1- 19 735 715
- US-A- 4 702 857

## Beschreibung

Die Erfindung betrifft die Herstellung von Polyestern aus den Monomeren Terephthalsäure, 5-Sulfoisophthalsäure, Alkyldiolen oder Polyalkylenglykole, und Polyalkylenglykolmonoalkylether und deren Verwendung in Wasch- und Reinigungsmitteln.

Polyester aus aromatischen Dicarbonsäuren wie die Terephthalsäure, die Isophthalsäure, sulfonierten aromatischen Dicarbonsäuren, wie die Sulfoisophthalsäure und Diolen, wie Alkylenglykol und deren Verwendung als "Soil Release Polymer (SRP)" sind lange bekannt und in zahlreichen Patentschriften beschrieben.

In US 4,427,557 werden Polyester mit Molekulargewichten im Bereich von 2 000 und 10 000 g/mol, hergestellt aus den Monomeren Ethylenglykol (1), Polyethylenglykol (2) mit Molekulargewichten von 200 bis 1000 g/mol, aromatischen Dicarbonsäuren (3) und Alkalisalzen von sulfonierten aromatischen Dicarbonsäuren (4), beschrieben und deren soil release Wirkung auf Polyester-Gewebe ausgelobt.

US 4,702,857 beansprucht Polyester aus Ethylenglykol, 1,2-Propylenglykol oder Mischungen daraus (1), Polyethylenglykol mit mindestens 10 Glykoleinheiten, das an einem Ende mit einer kurzkettigen Alkylgruppe, insbesondere mit einer Methylgruppe verschlossen ist (2), einer Dicarbonsäure bzw. -ester (3) und optional Alkalisalzen von sulfonierten aromatischen Dicarbonsäuren (4).

US 4,721,580 offenbart Polyester mit Terephthalat-Einheiten und sulfohaltigen Endgruppen, insbesondere sulfoethoxylierte Endgruppen MO₃S(CH₂CH₂O)ₙ-H und lobt deren Verwendung in Waschmittel und Weichspülmittel aus.

US 4,968,451 beschreibt Polyester mit sulfohaltigen Endgruppen, erhalten durch Copolymerisation von (Meth)allylalkohol, Alkylenoxid, Aryldicarbonsäure und C₂-C₄-Glykol und anschließender Sulfonierung.

In US 5,415,807 wird dargelegt, dass Soil Release Polymere mit sulfonierten Polyethoxy/Propoxy Endgruppen zur Kristallisation neigen, woraus eine Reduzierung der Soil Release Effekte resultiert. Die Schrift lehrt, dass die Kristallisationsneigung der SRP durch Zusatz von Hydrotropen unterdrückt werden kann.

In US 5,691,298 werden Soil Release Polymere mit verzweigtem Rückgrat aus Di-oder Polyhydroxysulfonat, Terephthalat- und 1,2-Oxyalkylenoxy-Einheiten mit nichtionischen oder anionischen Endgruppen beansprucht.

Bisher bekannte anionische Soil Release Polymere mit sulfohaltigen Gruppen zeichnen sich durch eine gute Wasserlöslichkeit aus, neigen jedoch zu Hygroskopizität und Klebrigkeit. Eine direkte Vermahlung der erkalteten Polyesterschmelze durch Hammer-, Sieb- oder so genannten Walzenstühle ist nicht möglich. Die hohe Aufnahme von Wasser während des Mahlprozesses führt zu Verklebungen und damit zum Zusammenbruch des kontinuierlichen Betriebes. Auch wenn durch spezielle, energieintensive Verfahren wie Tieftemperaturvermahlung (Kryo-Vermahlung) bzw. Sprühtrockenverfahren aus wässriger Lösung akzeptable Ergebnisse erzielt werden können, bleibt die Lagerstabilität der anionischen SRP-Granulate aufgrund des Wasseraufnahmevermögens eingeschränkt.

Die Aufgabe der vorliegenden Erfindung bestand darin, anionische Polyester herzustellen, die gut wasserlöslich sind, gute soil release Wirkung zeigen, kompatibel mit in Wasch- und Reinigungsmitteln gängigen Zusatz- und Hilfsstoffen sind, leicht in Formulierungen eingearbeitet werden können und hydrolysestabil sind.
Zudem sollen diese ohne hohen Energieaufwand in Form von lagerstabilen Granulaten konfektionierbar sein.

Es wurde überraschend gefunden, dass diese Aufgabe gelöst wird durch anionische Polyester, die sich formell ableiten von der Terephthalsäure, der 5-Sulfoisophthalsäure bzw. des Salzes der 5-Sulfoisophthalsäure, von Ethylenglykol bzw. Polyethylenglykol, Propylenglykol bzw. Polypropylenglykol und Polyalkylenglykolmonoalkylether, sowie gegebenenfalls von weiteren Monomeren mit 3 bis 6 zur Polykondensation befähigter Funktionen, insbesondere Säure-, Alkohol- oder Esterfunktionen.
Diese anionischen Polyester zeigen verbesserte Soil Release Wirkung, haben ein sehr gutes Auflöseverhalten und sind deutlich weniger feuchtigkeitsempfindlich. Besonders vorteilhaft ist, dass sie in einfacher Weise durch Vermahlen in Granulate überführt werden und in gewünschter Korngrößenverteilung dargeboten werden können.

Gegenstand der Erfindung sind Polyester, enthaltend Struktureinheiten1 bis 3 bzw. 1 bis 4: 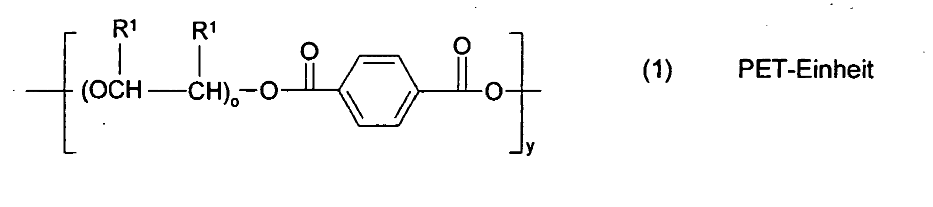 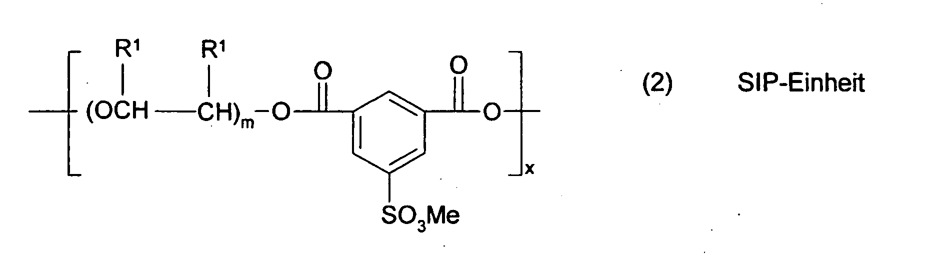 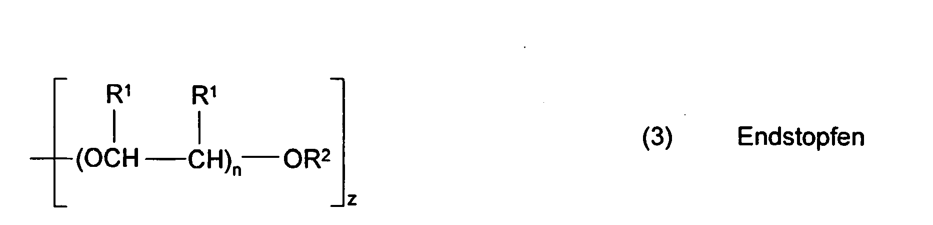 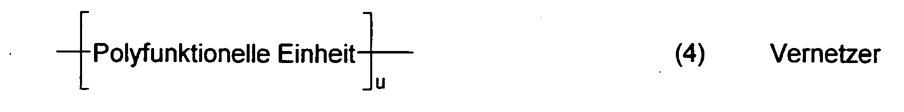 wobei
- R¹: voneinander unabhängig für H oder für eine (C₁-C₁₈) n- oder iso-Alkylgruppe,
bevorzugt Methyl, steht,
- R²: für eine lineare oder verzweigte (C₁-C₃₀)-Alkylgruppe oder für eine lineare oder verzweigte (C₂-C₃₀)-Alkenylgruppe, für eine Cycloalkylgruppe mit 5 bis 9 Kohlenstoffatomen, für eine (C₆-C₃₀) Arylgruppe- oder für eine (C₆-C₅₀) Arylalkylgruppe, bevorzugt Phenyl oder Benzyl steht,
m und o stehen unabhängig voneinander für eine Zahl von 1 bis 200, n steht für eine Zohl von 1 bis 5,
x, y und z stehen unabhängig voneinander für Zahlen von 1 bis 50,
mit der Maßgabe, dass x + y ≥ 2 und z > 0 sein müssen,
u steht für eine Zahl von 0 bis 5, bevorzugt 0 bis 0,5 und besonders bevorzugt von 0 bis 0,25, und
Me bedeutet Li⁺, Na⁺, K⁺, Mg⁺⁺/2, Ca⁺⁺/2, Al⁺⁺⁺/3, NH₄⁺, ein Monoalkylammonium-, Dialkylammonium-, Trialkylammonium- und/oder Tetraalkylammoniumion, wobei es sich bei den Alkylsubstituenten der Ammoniumionen unabhängig voneinander um (C₁-C₂₂)-Alkylreste oder (C₂-C₁₀)-Hydroxyalkylreste handelt.

Ein bevorzugter Gegenstand der Erfindung sind Polyester, wie oben definiert, wobei R¹ H und/oder Methyl, R² Methyl, o und m eine Zahl von 1 bis 200, bevorzugt 1 bis 20, besonders bevorzugt 1 bis 5, außerordentlich bevorzugt o und m = 1 bedeuten und n eine Zahl von 1 bis 5 ist,
x eine Zahl zwischen 1 und 30, bevorzugt zwischen 2 und 15, besonders bevorzugt zwischen 3 und 10,
y eine Zahl zwischen 1 und 25, bevorzugt zwischen 1 bis 10, besonders bevorzugt zwischen 1 und 5 und z eine Zahl zwischen 0,05 und 15, bevorzugt zwischen 0,1 und 10, besonderst bevorzugt zwischen 0,25 und 3 bedeutet.

Die erfindungsgemäßen Polyester werden erhalten durch Polykondensation von Terephthalsäuredialkylester, 5-Sulfoisophthalsäuredialkylester, Alkylenglykole, optional Polyalkylenglykole (bei m und/oder o > 1) und einseitig endverschlossenen Polyalkylenglykolen (Endstopfen).
Es soll darauf hingewiesen werden, dass für Zahlen m, n, o > 1 ein polymeres Gerüst vorliegt und damit die Koeffizienten jeden beliebigen Wert im gegebenen Intervall annehmen können. Dieser Wert spiegelt das zahlenmittlere Molekulargewicht wider.

Als PET-Einheit (1) im Sinne der Erfindung versteht man den Ester von Terephthalsäure mit einem oder mehreren difunktionellen, aliphatischen Alkoholen. Bevorzugt verwendet werden hierbei Ethylenglykol (R¹ jeweils H) oder 1,2-Propylenglykol (R¹ = H und -CH₃) und/oder kürzerkettige Polyethylenglykole und/oder Poly[ethlyenglykol-co-propylenglykol] mit zahlenmittleren Molekulargewichten von 100 bis 2000 g/mol. Besonders bevorzugt sind Mischungen aus Ethylenoxid und Propylenoxid. In den erfindungsgemäßen Strukturen können pro Polymerkette 1 bis 50 PET-Einheiten enthalten sein. Dem Experten ist klar, dass es sich hierbei stets um statistische Mittelwerte handelt mit einer von System zu System unterschiedlichen natürlichen Verteilung.

Als SIP-Einheit (2) im Sinne der Erfindung versteht man den Ester von 5-Sulfoisophthalsäure mit einem oder mehreren difunktionellen, aliphatischen Alkoholen. Bevorzugt verwendet werden hierbei Ethylenglykol (R¹ jeweils H) und/oder 1,2-Propylenglykol (R¹= H und -CH₃) oder kürzerkettige Polyethylenglykole mit zahlenmittleren Molekulargewichten von 100 bis 2000 g/mol. Besonders bevorzugt sind Mischungen aus Ethylenoxid und Propylenoxid. In den erfindungsgemäßen Strukturen können 1 bis 50 SIP-Einheiten vorhanden sein. Auch hier gelten die im vorangegangenen gemachten Aussagen über statistische Verteilungen.
Als Endstopfen (3) im Sinne der Erfindung gelten alle nichtionisch einseitig verschlossenen Polyalkylenglykolmonoalkylether gemäß Struktureinheit (3). Bevorzugt verwendet werden Poly[ethlyenglykol-co-propylenglykol]-monomethylether und Polyethylenglykolmonomethylether der allgemeinen Form: CH₃-O-(C₂H₄O)ₙ-H beide mit n = 1 bis 5. Ganz besonderst bevorzugt sind Polyester mit Polyalkylenlykolmonoalkylether der allgemeinen Form: CH₃-O-(C₂H₄O)ₙ-H mit n = 2 bis 5 als Endgruppe.

Da durch Einsatz von Endstopfen das theoretische bei quantitativem Umsatz zu erzielende maximale mittlere Molekulargewicht einer Polyesterstruktur vorgegeben wird, gilt als erfindungsgemäße Einsatzmenge der Struktureinheit (3) diejenige, die zum erreichen der im vorangegangenen beschriebenen erfindungsgemäßen mittleren Molekulargewichte notwendig ist.

Neben linearen Polyestern, die aus den im vorangegangenen beschriebenen Struktureinheiten 1-3 resultieren, sind auch vernetzte oder verzweigte Polyesterstrukturen im Sinne der Erfindung möglich. Ausgedrückt wird dies durch die Anwesenheit einer vernetzend wirkenden Polyfunktionellen Struktureinheit (4) mit mindestens drei bis maximal 6 zur Veresterungsreaktion befähigten funktionellen Gruppen. Als funktionelle Gruppierungen können dabei beispielsweise Säure-, Alkohol-, Ester-, Anhydrid- oder Epoxygruppen benannt werden. Dabei sind auch unterschiedliche Funktionalitäten in einem Molekül im Sinne der Erfindung.

Als bevorzugte Beispiele können hierbei Zitronensäure, Äpfelsäure, Weinsäure und Gallussäure, besonders bevorzugt 2,2-Dihydroxymethylpropionsäure benannt werden.
Weiterhin bevorzugt werden mehrwertige Alkohole wie Pentaerythrol, Glycerin, Sorbitol und Trimethylolpropan eingesetzt.
Weiterhin bevorzugt sind mehrwertige aliphatische und aromatische Carbonsäuren, wie Benzol-1,2,3-tricarbonsäure (Hemimellithsäure), Benzol-1,2,4-tricarbonsäure (Trimellithsäure), besonders bevorzugt Benzol-1,3,5-tricarbonsäure (Trimesithsäure).

Der Gewichtsanteil an vernetzenden Monomere, bezogen auf die Gesamtmasse der Polyester, beträgt bevorzugt 0 bis 10 Gew.-%, besonders bevorzugt 0 bis 5 Gew.-% und insbesondere bevorzugt 0 bis 3 Gew.-%.

Die erfindungsgemäßen Polyester, enthaltend die Struktureinheiten 1, 2 und 3 und gegebenenfalls vernetzende Monomere4 haben im allgemeinen zahlenmittlere Molekulargewichte im Bereich von 700 bis 50.000 g/mol, wobei das zahlenmittlere Molekulargewicht bestimmt wird mittels Größenausschlusschromatographie in wässriger Lösung unter Verwendung einer Kalibrierung mit Hilfe eng verteilter Polyacrylsäure-Na-Salz Standards. Es soll an dieser Stelle darauf hingewiesen werden, dass sich alle Molekulargewichtsangaben in dieser Schrift auf das zahlenmittlere Molekulargewicht beziehen, auch wenn dieses nicht explizit benannt wird.

Bevorzugt liegen die zahlenmittleren Molekulargewichte im Bereich von 800 bis 25.000 g/mol, insbesondere 1.000 bis 15.000 g/ mol, besonders bevorzugt 1.200 bis 12.000 g/mol.

Die molaren Einsatzmengen der Struktureinheit 3 werden so gewählt, dass die in der Erfindung genannten zahlenmittleren Molekulargewichte erreicht werden.
Ein bevorzugter Gegenstand der Erfindung sind feste Polyester, wie oben definiert, die dadurch gekennzeichnet sind, dass sie Erweichungspunkte oberhalb 40°C aufweisen. Die erfindungsgemäßen festen Polyester haben bevorzugt einen Erweichungspunkt zwischen 50 und 200°C, besonders bevorzugt zwischen 80°C und 150°C und außerordentlich bevorzugt zwischen 100°C und 120°C.

Der Vorteil dieser Polyester liegt darin, dass sie bei der Lagerung bei 0°C bis 40°C. über mehrere Monate hinweg rieselfähig bleiben und keinerlei Klebrigkeit zeigen.

Die Synthese der erfindungsgemäßen Polyester erfolgt nach an sich bekannten Verfahren, indem die oben genannten Komponenten unter Zusatz eines Katalysators zunächst bei Normaldruck auf Temperaturen von 160 bis ca. 220°C unter Verwendung einer Inert-Atmosphäre erhitzt werden. Dann werden die erforderlichen Molekulargewichte im Vakuum bei Temperaturen von 160 bis ca. 240°C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat. Bezüglich weiterer Einzelheiten zur Durchführung des Verfahrens wird auf EP 442 101 verwiesen.

Ein bevorzugtes Verfahren zur Herstellung der erfindungsgemäßen Polyester ist dadurch gekennzeichnet, dass die Kondensation der Komponenten im Eintopfverfahren durchgeführt wird, wobei die Umesterungs- und Kondensationskatalysatoren vor dem Aufheizen zugegeben wird.

Die erfindungsgemäßen Polyester sind von fester Konsistenz und können in einfacher Weise zu Pulver vermahlen oder zu Granulaten definierter Partikelgrößen kompaktiert bzw. agglomeriert werden.

Die Granulierung der erfindungsgemäßen Polyester kann in der Weise erfolgen, dass die bei der Synthese als Schmelze anfallenden Copolymere durch Abkühlen in einem kühlen Gasstrom, beispielsweise Luft- oder Stickstoffstrom oder vorteilhafter Weise durch Aufbringen auf eine Schuppenwalze oder auf ein Laufbandes bei 40 bis 80°C, bevorzugt 45 bis 55°C zu Schuppen oder flakes verfestigt werden. Dieses Grobgut kann beispielsweise im Walzenstuhl oder in der Siebmühle vermahlen werden, der sich eine Siebung anschließen kann.
Die Granulierung kann auch in der Weise erfolgen, dass die erfindungsgemäßen Polyester nach der Erstarrung zu Pulver mit Partikelgrößen < 400 µm vermahlen werden und anschließend durch Kompaktierung bzw. Agglomerierung in Granulate mit definierten Partikelgrößen umgesetzt werden.

Für speziellen Ausführungsformen kann es auch vorteilhaft ein, die Schmelze oder die erstarrten Schuppen bzw. flakes in Wasser aufzulösen und wässrige Lösungen mit Konzentrationen von 1 bis 99 Gew.-% an Polyester im Sprühturm bei Eintrittstemperaturen von 150 bis 180°C und Austrittstemperaturen von 80 bis 120°C unter Normaldruck in der Wirbelschicht zu granulieren.

Die Korngröße des auf diese Weise hergestellten Granulats liegt im allgemeinen im Bereich von 100 µm - 2000 µm, vorzugsweise 300 µm - 1800 µm, besonders bevorzugt 600 µm - 1200 µm. Das Schüttgewicht liegt im Bereich von 400 bis 700 kg/m³.

Gegenstand der Erfindung ist außerdem die Verwendung der erfindungsgemäßen Polyester in Wasch- und Reinigungsmitteln, Textilpflegemitteln und Mitteln zur Ausrüstung von Textilien. Die erfindungsgemäßen Polyester verleihen den Textilfasern signifikant verbesserte schmutzablösende Eigenschaften und unterstützen das Schmutzablösevermögen der übrigen Waschmittelbestandteile gegenüber öligen, fettigen oder Pigmentanschmutzungen wesentlich.
Weiter von Vorteil kann die Verwendung der erfindungsgemäßen Polyester in Nachbehandlungsmittel für die Wäsche, beispielsweise in einem Weichspülmittel sein.

Mit Hilfe der erfindungsgemäßen Polyester in Reinigungsmitteln für harte Oberflächen lassen sich die behandelten Oberflächen schmutzabstoßend ausrüsten.

Die Wasch- und Reinigungsmittelformulierungen, in denen die erfindungsgemäßen Polyester eingesetzt werden können, sind pulver-, granulat-, pasten-, gelförmig oder flüssig.

Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, Bügelhilfen. Die erfindungsgemäßen Polyester können auch in Haushaltsreinigungsmittel, beispielsweise Allzweckreiniger, Geschirrspülmittel, Teppichreinigungs- und Imprägniermittel, Reinigungs- und Pflegemittel für Böden und andere harte Oberfläche, z.B. aus Kunststoff, Keramik, Glas oder mit Nanotechnologie beschichtete Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäßen Wasch- Pflege- und Reinigungsmittelformulierungen enthalten mindestens 0,1 Gew.-%, bevorzugt zwischen 0,1 und 10 Gew.-% und besonders bevorzugt 0,2 bis 3 % Gew.-% der erfindungsgemäßen Polyester, bezogen auf die fertigen Mittel.

Die Formulierungen sind je nach ihrer vorgesehenen Anwendung in ihrer Zusammensetzung der Art der zu behandelnden oder zu waschenden Textilien oder der zu reinigenden Oberflächen anzupassen. Die erfindungsgemäßen Wasch- und Reinigungsmittel können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller, weich machende Komponente enthalten. Außerdem können Formulierungen oder Teile der Formulierung im Sinne der Erfindung durch Farbstoffe und/oder Duftstoffe gezielt eingefärbt und/oder parfümiert werden.

Die Gesamtkonzentration von Tensiden in der fertigen Wasch- und Reinigungsmittelformulierung kann von 1 bis 99 % und bevorzugt von 5 bis 80 % (alles Gew.-%) betragen. Die verwendeten Tenside können anionisch, nichtionisch, amphoter und kationisch sein. Es können auch Mischungen der genannten Tenside verwendet werden. Bevorzugte Wasch- und Reinigungsmittelformulierungen enthalten anionische und/oder nichtionische Tenside und deren Mischungen mit weiteren Tensiden.
Als anionische Tenside kommen Sulfate, Sulfonate, Carboxylate, Phosphate und Mischungen daraus in Betracht. Geeignete Kationen sind hierbei Alkalimetalle, wie z.B. Natrium oder Kalium oder Erdalkalimetalle, wie z. B. Calcium oder Magnesium sowie Ammonium, substituierte Ammoniumverbindungen, einschließlich Mono-, Di- oder Triethanolammoniumkationen, und Mischungen daraus. Folgende Typen von anionischen Tensiden sind von besonderem Interesse:
Alkylestersulfonate, Alkylsulfate, Alkylethersulfate, Alkylbenzolsulfonate, Alkansulfonate und Seifen, wie im Folgenden beschrieben.

Alkylestersulfonate sind unter anderem lineare Ester von C₈-C₂₀-Carboxylsäuren (d.h. Fettsäuren), welche mittels gasförmigem SO₃ sulfoniert werden, wie in "The Journal of the American Oil Chemists Society" 52 (1975), pp. 323-329 beschrieben wird. Geeignete Ausgangsmaterialien sind natürliche Fette wie z.B. Talg, Kokosöl und Palmöl, können aber auch synthetischer Natur sein. Bevorzugte Alkylestersulfonate, speziell für Waschmittelanwendungen, sind Verbindungen der Formel 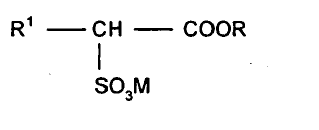 worin R¹ einen C₈-C₂₀-Kohlenwasserstoffrest, bevorzugt Alkyl, und R einen C₁-C₆ Kohlenwasserstoffrest, bevorzugt Alkyl, darstellt. M steht für ein Kation, das ein wasserlösliches Salz mit dem Alkylestersulfonat bildet. Geeignete Kationen sind Natrium, Kalium, Lithium oder Ammoniumkationen, wie Monoethanolamin, Diethanolamin und Triethanolamin. Bevorzugt bedeuten R¹ C₁₀-C₁₆-Alkyl und R Methyl, Ethyl oder Isopropyl. Besonders bevorzugt sind Methylestersulfonate, in denen R¹ C₁₀-C₁₆-Alkyl bedeutet.

Alkylsulfate sind hier wasserlösliche Salze oder Säuren der Formel ROSO₃M, worin R ein C₁₀-C₂₄-Kohlenwasserstoffrest, bevorzugt ein Alkyl- oder Hydroxyalkylrest mit C₁₀-C₂₀-Alkylkomponente, besonders bevorzugt ein C₁₂-C₁₈ Alkyl- oder Hydroxyalkylrest ist. M ist Wasserstoff oder ein Kation, z.B. ein Alkalimetallkation (z.B. Natrium, Kalium, Lithium) oder Ammonium oder substituiertes Ammonium, z. B. Methyl-, Dimethyl- und Trimethylammoniumkationen und quaternäre Ammoniumkationen, wie Tetramethylammonium- und Dimethylpiperidiniumkationen und quartäre Ammoniumkationen, abgeleitet von Alkylaminen wie Ethylamin, Diethylamin, Triethylamin und Mischungen davon. Alkylketten mit C₁₂-C₁₆ sind für niedrige Waschtemperaturen (z.B. unter ca. 50°C) und Alkylketten mit C₁₆-C₁₈ für höhere Waschtemperaturen (z.B. oberhalb ca. 50°C) bevorzugt.

Alkylethersulfate sind wasserlösliche Salze oder Säuren der Formel RO(A)ₘ SO₃M, worin R einen unsubstituierten C₁₀-C₂₄-Alkyl- oder Hydroxyalkylrest, bevorzugt einen C₁₂-C₂₀ Alkyl- oder Hydroxyalkylrest, besonders bevorzugt C₁₂-C₁₈-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quarternäre Ammoniumkationen wie Tetramethylammonium und Dimethylpiperidiniumkationen sowie solche, die von Alkylaminen, wie Ethylamin, Diethylamin, Triethylamin oder Mischungen davon abgeleitet sind. Als Beispiele seien C₁₂- bis C₁₈-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

In sekundären Alkansulfonaten kann die Alkylgruppe entweder gesättigt oder ungesättigt, verzweigt oder linear und gegebenenfalls mit einer Hydroxylgruppe substituiert sein. Die Sulfogruppe kann an einer beliebigen Position der C-Kette sein, wobei die primären Methylgruppen am Kettenanfang und Kettenende keine Sulfonatgruppen besitzen. Die bevorzugten sekundären Alkansulfonate enthalten lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt.

Neben sekundären Alkansulfonaten können auch primäre Alkansulfonate in den erfindungsgemäßen Wasch- und Reinigungsmitteln eingesetzt werden.
Die bevorzugten Alkylketten und Kationen entsprechen denen der sekundären Alkansulfonaten.

Die Herstellung von primärer Alkansulfonsäure, aus der die als Tensid wirksamen entsprechenden Sulfonate erhalten werden, ist z.B. in EP 854 136 A1 beschrieben.

Weitere geeignete anionische Tenside sind Alkenyl- oder Alkylbenzolsulfonate. Die Alkenyl- oder Alkylgruppe kann verzweigt oder linear und gegebenenfalls mit einer Hydroxylgruppe substituiert sein. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium. Gleiches gilt für Alkenylbenzolsulfonate.

Der Begriff anionische Tenside schließt auch Olefinsulfonate mit ein, die durch Sulfonierung von C₁₂-C₂₄-, vorzugsweise C₁₄-C₁₆-α-Olefinen mit Schwefeltrioxid und anschließende Neutralisation erhalten werden. Bedingt durch das Herstellverfahren, können diese Olefinsulfonate kleinere Mengen an Hydroxyalkansulfonaten und Alkandisulfonaten enthalten. Spezielle Mischungen von α-Olefinsulfonaten sind in US-3,332,880 beschrieben.

Weitere bevorzugte anionische Tenside sind Carboxylate, z.B. Fettsäureseifen und vergleichbare Tenside. Die Seifen können gesättigt oder ungesättigt sein und können verschiedene Substituenten, wie Hydroxylgruppen oder α-Sulfonatgruppen enthalten. Bevorzugt sind lineare gesättigte oder ungesättigte Kohlenwasserstoffreste als hydrophober Anteil mit ca. 6 bis ca. 30, bevorzugt ca. 10 bis ca. 18 Kohlenstoffatomen.

Als anionische Tenside kommen weiterhin Salze von Acylaminocarbonsäuren in Frage, die durch Umsetzung von Fettsäurechloriden mit Natriumsarkosinat im alkalischen Medium entstehenden Acylsarcosinate; Fettsäure-Eiweiß-Kondensationsprodukte, die durch Umsetzung von Fettsäurechloriden mit Oligopeptiden erhalten werden; Salze von Alkylsulfamidocarbonsäuren; Salze von Alkyl- und Alkylarylethercarbonsäuren; C₈-C₂₄-Olefinsulfonate, sulfonierte Polycarboxylsäuren, hergestellt durch Sulfonierung der Pyrolyseprodukte von Erdalkalimetallcitraten, wie z.B. beschrieben in GB-1,082,179; Alkylglycerinsulfate, Oleylglycerinsulfate, Alkylphenolethersulfate, primäre Paraffinsulfonate, Alkylphosphate, Alkyletherphosphate, Isethionate, wie Acylisethionate, N-Acyltauride, Alkylsuccinate, Sulfosuccinate, Monoester der Sulfosuccinate (besonders gesättigte und ungesättigte C₁₂-C₁₈-Monoester) und Diester der Sulfosuccinate (besonders gesättigte und ungesättigte C₁₂-C₁₈-Diester), Acylsarcosinate, Sulfate von Alkylpolysacchariden wie Sulfate von Alkylpolyglycosiden, verzweigte primäre Alkylsulfate und Alkylpolyethoxycarboxylate wie die der Formel RO(CH₂CH₂)ₖCH₂COO-M⁺, worin R C₈ bis C₂₂-Alkyl, k eine Zahl von 0 bis 10 und M ein Kation ist, Harzsäuren oder hydrierte Harzsäuren, wie Rosin oder hydriertes Rosin oder Tallölharze und Tallölharzsäuren.

Als nicht-ionische Tenside kommen beispielsweise folgende Verbindungen in Frage: Polyethylen-, Polypropylen- und Polybutylenoxidkondensate von Alkylphenolen.

Diese Verbindungen umfassen die Kondensationsprodukte von Alkylphenolen mit einer C₆- bis C₂₀-Alkylgruppe, die entweder linear oder verzweigt sein kann, mit Alkenoxiden. Bevorzugt sind Verbindungen mit ca. 5 bis 25 mol Alkenoxid pro mol Alkylphenol. Kommerziell erhältliche Tenside diesen Typs sind z.B. Igepal^{®} CO-630, Triton^{®} X-45, X-114, X-100 und X102, und die ^{®}Arkopal-N-Marken der Clariant GmbH. Diese Tenside werden als Alkylphenolalkoxilate, z.B. Alkylphenolethoxilate, bezeichnet.

Kondensationsprodukte von aliphatischen Alkoholen mit ca. 1 bis ca. 25 mol Ethylenoxid.

Die Alkylkette der aliphatischen Alkohole kann linear oder verzweigt, primär oder sekundär sein, und enthält im Allgemeinen ca. 8 bis ca. 22 Kohlenstoffatome. Besonders bevorzugt sind die Kondensationsprodukte von C₁₀- bis C₂₀-Alkoholen mit ca. 2 bis ca. 18 mol Ethylenoxid pro mol Alkohol. Die Alkylkette kann gesättigt oder auch ungesättigt sein. Die Alkoholethoxilate können eine enge ("Narrow Range Ethoxilates") oder eine breite Homologenverteilung des Ethylenoxides ("Broad Range Ethoxilates") aufweisen. Beispiele von kommerziell erhältlichen nichtionischen Tensiden dieses Types sind Tergitol^{®} 15-S-9 (Kondensationsprodukt eines linearen sekundären C₁₁-C₁₅-Alkohols mit 9 mol Ethylenoxid), Tergitol^{®} 24-L-NMW (Kondensationsprodukt eines linearen primären C₁₂-C₁₄-Alkohols mit 6 mol Ethylenoxid bei enger Molgewichtsverteilung). Ebenfalls unter diese Produktklasse fallen die Genapol^{®}-Marken der Clariant GmbH.

Kondensationsprodukte von Ethylenoxid mit einer hydrophoben Basis, gebildet durch Kondensation von Propylenoxid mit Propylenglykol.

Der hydrophobe Teil dieser Verbindungen weist bevorzugt ein Molekulargewicht zwischen ca. 1500 und ca. 1800 auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu ca. 40 mol Ethylenoxid entspricht. Kommerziell erhältliche Beispiele dieser Produktklasse sind die Pluronic^{®}-Marken der BASF und die ^{®}Genapol PF-Marken der Clariant GmbH.

Kondensationsprodukte von Ethylenoxid mit einem Reaktionsprodukt von Propylenoxid und Ethylendiamin.

Die hydrophobe Einheit dieser Verbindungen besteht aus dem Reaktionsprodukt von Ethylendiamin mit überschüssigem Propylenoxid und weist im Allgemeinen ein Molekulargewicht von ca. 2500 bis 3000 auf. An diese hydrophobe Einheit wird Ethylenoxid bis zu einem Gehalt von ca. 40 bis ca. 80 Gew.-% Polyoxyethylen und einem Molekulargewicht von ca. 5000 bis 11000 addiert. Kommerziell erhältliche Beispiele dieser Verbindungsklasse sind die ^{®}Tetronic-Marken der BASF und die ^{®}Genapol PN-Marken der Clariant GmbH.

### Semipolare nichtionische Tenside

Diese Kategorie von nichtionischen Verbindungen umfasst wasserlösliche Aminoxide, wasserlösliche Phosphinoxide und wasserlösliche Sulfoxide, jeweils mit einem Alkylrest von ca. 10 bis ca. 18 Kohlenstoffatomen. Semipolare nichtionische Tenside sind auch Aminoxide der Formel

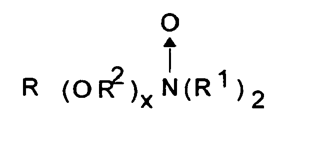

R ist hierbei eine Alkyl-, Hydroxyalkyl- oder Alkylphenolgruppe mit einer Kettenlänge von ca. 8 bis ca. 22 Kohlenstoffatomen, R² ist eine Alkylen- oder Hydroxyalkylengruppe mit ca. 2 bis 3 Kohlenstoffatomen oder Mischungen hiervon, jeder Rest R¹ ist eine Alkyl- oder Hydroxyalkylgruppe mit ca. 1 bis ca. 3 Kohlenstoffatomen oder eine Polyethylenoxidgruppe mit ca. 1 bis ca. 3 Ethylenoxideinheiten und x bedeutet eine Zahl von 0 bis etwa 10. Die R¹-Gruppen können miteinander über ein Sauerstoff- oder Stickstoffatom verbunden sein und somit einen Ring bilden. Aminoxide dieser Art sind besonders C₁₀-C₁₈-Alkyldimethylaminoxide und C₈-C₁₂-Alkoxiethyl-Dihydroxyethylaminoxide.

### Fettsäureamide

### Fettsäureamide besitzen die Formel

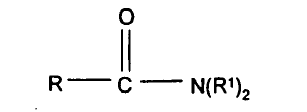

worin R eine Alkylgruppe mit ca. 7 bis ca. 21, bevorzugt ca. 9 bis ca. 17 Kohlenstoffatomen ist und jeder Rest R¹ Wasserstoff, C₁-C₄-Alkyl, C₁-C₄-Hydroxyalkyl oder (C₂H₄O)ₓH bedeutet, wobei x von ca. 1 bis ca. 3 variiert. Bevorzugt sind C₈-C₂₀-Amide, -monoethanolamide, -diethanolamide und -isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate.

Typische Beispiele für amphotere bzw. zwitterionische Tenside sind Alkylbetaine, Alkylamidbetaine, Aminopropionate, Aminoglycinate, oder amphotere Imidazolinium-Verbindungen der Formel 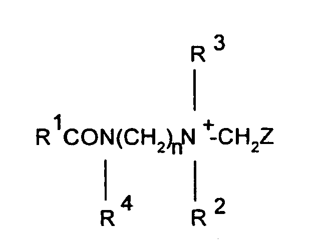 worin R¹ C₈-C₂₂-Alkyl- oder -Alkenyl, R² Wasserstoff oder CH₂CO₂M, R³ CH₂CH₂OH oder CH₂CH₂OCH₂CH₂CO₂M, R⁴ Wasserstoff, CH₂CH₂OH oder CH₂CH₂COOM, Z CO₂M oder CH₂CO₂M, n 2 oder 3, bevorzugt 2, M Wasserstoff oder ein Kation wie Alkalimetall, Erdalkalimetall, Ammonium oder Alkanolammonium bedeutet.

Bevorzugte amphotere Tenside dieser Formel sind Monocarboxylate und Dicarboxylate. Beispiele hierfür sind Cocoamphocarboxypropionat, Cocoamidocarboxypropionsäure, Cocoamphocarboxyglycinat (oder auch als Cocoamphodiacetat bezeichnet) und Cocoamphoacetat.

Weitere bevorzugte amphotere Tenside sind Alkyldimethylbetaine und Alkyldipolyethoxybetaine mit einem Alkylrest mit ca. 8 bis ca. 22 Kohlenstoffatomen, der linear oder verzweigt sein kann, bevorzugt mit 8 bis 18 Kohlenstoffatomen und besonders bevorzugt mit ca. 12 bis ca. 18 Kohlenstoffatomen. Diese Verbindungen werden z.B. von der Clariant GmbH unter dem Handelsnamen ^{®}Genagen LAB vermarktet. Geeignete kationische Tenside sind substituierte oder unsubstituierte geradkettige oder verzweigte quartäre Ammoniumsalze vom Typ R¹N(CH₃)₃^{ρ}X^{σ}, R¹R²N(CH₃)₂^{ρ}X^{σ}, R¹R²R³N(CH₃)^{ρ}X^{σ} oder R¹R²R³R⁴N^{ρ}X^{σ}. Die Reste R¹, R², R³ und R⁴ können vorzugsweise unabhängig voneinander unsubstituiertes Alkyl mit einer Kettenlänge zwischen 8 und 24 C-Atomen, insbesondere zwischen 10 und 18 C-Atomen, Hydroxyalkyl mit ca. 1 bis ca. 4 C-Atomen, Phenyl, C₂- bis C₁₈-Alkenyl, C₇- bis C₂₄-Aralkyl, (C₂H₄O)ₓH, wobei x von ca. 1 bis ca. 3 bedeutet, ein oder mehrere Estergruppen enthaltende Alkylreste oder cyclische quartäre Ammoniumsalze sein. X ist ein geeignetes Anion.

In bevorzugten Ausführungsformen enthalten die erfindungsgemäßen Wasch- und Reinigungsmittel lineares Alkylbenzolsufonat. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium. In ebenso bevorzugten Ausführungsformen enthalten die erfindungsgemäßen Wasch- und Reinigungsmittel sekundäre Alkansulfonate mit lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt

In ebenso bevorzugten Ausführungsformen enthalten die erfindungsgemäßen Wasch- und Reinigungsmittel Alkylethersulfate der Formel RO(A)ₘ SO₃M, worin R einen unsubstituierten C₁₀-C₂₄-Alkyl- oder Hydroxyalkylrest, bevorzugt einen C₁₂-C₂₀ Alkyl- oder Hydroxyalkylrest, besonders bevorzugt C₁₂-C₁₈-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quaternäre Ammoniumkationen wie Tetramethylammonium und Dimethylpiperidiniumkationen sowie solche, die von Alkylaminen, wie Ethylamin, Diethylamin, Triethylamin oder Mischungen davon abgeleitet sind. Als Beispiele seien C₁₂- bis C₁₈-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

Als Emulgatoren kommen in Betracht Anlagerungsprodukte von 0 bis 30 Mol Alkylenoxid, insbesondere Ethylen-, Propylen- und/oder Butylenoxid an lineare oder verzweigte, gesättigte oder ungesättigte Fettalkohole mit 8 bis 22 C-Atomen, an Fettsäuren mit 12 bis 22 C-Atomen, an Alkylphenole mit 8 bis 15 C-Atomen in der Alkylgruppe und an Sorbitanester;
(C₁₂-C₁₈)-Fettsäuremono- und -diester von Anlagerungsprodukten von 0 bis 30 Mol Ethylenoxid an Glycerin;
Glycerinmono- und -diester und Sorbitanmono- und -diester von gesättigten und ungesättigten Fettsäuren mit 6 bis 22 Kohlenstoffatomen und gegebenenfalls deren Ethylenoxidanlagerungsprodukte;
Anlagerungsprodukte von 5 bis 60 Mol, vorzugsweise 15 bis 60 Mol, Ethylenoxid an Rizinusöl und/oder gehärtetes Rizinusöl;
Polyol- und insbesondere Polyglycerinester, wie z.B. Polyglycerinpolyricinofeat und Polyglycerinpoly-12-hydroxystearat.

Bevorzugt sind flüssige Fettsäureester, die sowohl ethoxyliert (PEG-10 Polyglyceryl-2 Laurate) als auch nicht ethoxyliert (Polyglyceryl-2 Sesquiisostearate) sein können.

Weitere bevorzugte erfindungsgemäße Mischungen enthalten Sorbitolester, hergestellt durch Reaktion von Sorbitol mit Fettsäuremethylestern oder Fettsäuretriglyceriden. Der Fettsäurerest in den Fettsäuremethylestern und Fettsäuretriglyceriden enthält im Allgemeinen 8 bis 22 C-Atome und kann geradkettig oder verzweigt, gesättigt oder ungesättigt sein. Beispiele hierfür sind Palmitinsäure, Stearinsäure, Laurinsäure, Linolsäure, Linolensäure, Isostearinsäure oder Ölsäure. Als Fettsäuretriglyceride kommen alle nativen tierischen oder pflanzlichen Öle, Fette und Wachse in Frage, beispielsweise Olivenöl, Rapsöl, Palmkernöl, Sonnenblumenöl, Kokosöl, Leinöl, Ricinusöl, Sojabohnenöl, gegebenenfalls auch in raffinierter oder hydrierter Form. Da diese natürlichen Fette, Öle und Wachse normalerweise Mischungen von Fettsäuren mit unterschiedlicher Kettenlänge darstellen, gilt dies auch für die Fettsäurereste in den erfindungsgemäß eingesetzten Sorbitolestern. Die erfindungsgemäß eingesetzten Sorbitolester können auch alkoxyliert, vorzugsweise ethoxyliert, sein.

Des Weiteren können anionische Emulgatoren, wie ethoxylierte und nicht ethoxylierte mono-, di- oder tri-Phosphorsäureester, aber auch kationische Emulgatoren wie mono-, di- und tri-Alkylquats und deren polymere Derivate eingesetzt werden.

Ebenfalls geeignet sind Gemische von Verbindungen aus mehreren dieser Substanzklassen.

Weitere Wasch- und Reinigungsmittelinhaltsstoffe, die in der vorliegenden Erfindung enthalten sein können, umfassen anorganische und/oder organische Gerüststoffe, um den Härtegrad des Wassers zu mindern.

Diese Gerüststoffe können mit Gewichtsanteilen von etwa 5 bis etwa 80 % in den Wasch- und Reinigungsmittelzusammensetzungen enthalten sein. Anorganische Gerüststoffe umfassen beispielsweise Alkali-, Ammonium- und Alkanolammoniumsalze von Polyphosphaten wie etwa Tripolyphosphate, Pyrophosphate und glasartige polymere Metaphosphate, Phosphonaten, Silikaten, Carbonaten einschließlich Bicarbonate und Sesquicarbonate, Sulfaten und Aluminosilikaten.

Beispiele für Silikatgerüststoffe sind die Alkalimetallsilikate, insbesondere diejenigen mit einem SiO₂:Na₂O-Verhältnis zwischen 1,6:1 und 3,2:1 sowie Schichtsilikate, beispielsweise Natriumschichtsilikate, wie beschrieben in US-4,664,839, erhältlich von Clariant GmbH unter der Marke SKS^{®}. SKS-6^{®} ist ein besonders bevorzugter Schichtsilikatgerüststoff.

Aluminosilikatgerüststoffe sind für die vorliegende Erfindung besonders bevorzugt. Es handelt sich dabei insbesondere um Zeolithe mit der Formel Na_{z}[(AlO₂)_{z}(SiO₂)_{y}]·xH₂O, worin z und y ganze Zahlen von mindestens 6 bedeuten, das Verhältnis von z zu y zwischen 1,0 bis etwa 0,5 liegt, und x eine ganze Zahl von etwa 15 bis etwa 264 bedeutet.

Geeignete Ionentauscher auf Aluminosilikatbasis sind im Handel erhältlich. Diese Aluminosilikate können von kristalliner oder amorpher Struktur sein, und können natürlich vorkommend oder auch synthetisch hergestellt sein. Verfahren für die Herstellung von Ionentauschern auf Aluminosilikatbasis werden beschrieben in US-3,985,669 und US-4,605,509. Bevorzugte Ionentauscher auf der Basis synthetischer kristalliner Aluminosilikate sind erhältlich unter der Bezeichnung Zeolith A, Zeolith P(B) (einschließlich der in EP-A-0 384 070 offenbarten) und Zeolith X. Bevorzugt sind Aluminosilikate mit einem Partikeldurchmesser zwischen 0,1 und 10 µm.
Geeignete organische Gerüststoffe umfassen Polycarboxylverbindungen, wie beispielsweise Etherpolycarboxylate und Oxydisuccinate, wie beispielsweise in US-3,128,287 und US-3,635,830 beschrieben. Ebenfalls soll auf "TMS/TDS"-Gerüststoffe aus US-4,663,071 verwiesen werden.

Andere geeignete Gerüststoffe umfassen die Etherhydroxypolycarboxylate, Copolymere von Maleinsäureanhydrid mit Ethylen oder Vinylmethylether, 1,3,5-Trihydroxybenzol-2,4,6-trisutfonsäure und Carboxymethyloxybernsteinsäure, die Alkali-, Ammonium- und substituierten Ammoniumsalze von Polyessigsäuren wie z.B. Ethylendiamintetraessigsäure und Nitrilotriessigsäure, sowie Polycarbonsäuren, wie Mellithsäure, Bernsteinsäure, Oxydibernsteinsäure, Polymaleinsäure, Benzol-1,3,5-tricarbonsäure, Carboxymethyloxybernsteinsäure, sowie deren lösliche Salze.

Gerüststoffe auf Citratbasis, z.B. Zitronensäure und ihre löslichen Salze, insbesondere das Natriumsalz, sind bevorzugte Polycarbonsäuregerüststoffe, die auch in granulierten Formulierungen, insbesondere zusammen mit Zeolithen und/oder Schichtsilikaten verwendet werden können.

Weitere geeignete Gerüststoffe sind die 3,3-Dicarboxy-4-oxa-1,6-hexandioate und die verwandten Verbindungen, die in US-4,566,984 offenbart sind.

Wenn Gerüststoffe auf Phosphorbasis verwendet werden können, und insbesondere wenn Seifenstücke für die Wäsche von Hand formuliert werden sollen, können verschiedene Alkalimetallphosphate wie etwa Natriumtripolyphosphat, Natriumpyrophosphat und Natriumorthophosphat verwendet werden. Ebenfalls können Phosphonatgerüststoffe, wie Ethan-1-hydroxy-1,1-diphosphonat und andere bekannte Phosphonate wie sie beispielsweise in US-3,159,581, US-3,213,030, US-3,422,021, US-3,400,148 und US-3,422,137 offenbart sind, verwendet werden.

Die Wasch- und Reinigungsmittelzusammensetzungen der vorliegenden Erfindung können gegebenenfalls einen oder mehrere konventionelle Bleichmittel enthalten, sowie Aktivatoren oder Stabilisatoren, insbesondere Peroxysäuren, die nicht mit den erfindungsgemäßen Polyestern reagieren.
Die Peroxysäure kann entweder eine freie Peroxysäure sein, oder eine Kombination aus einem anorganischen Persalz, beispielsweise Natriumperborat oder Natriumpercarbonat und einem organischen Peroxysäure-Vorläufer, der zu einer Peroxysäure umgewandelt wird, wenn die Kombination des Persalzes und des Peroxysäure-Vorläufers in Wasser aufgelöst wird. Die organischen Peroxysäure-Vorläufer werden im Stand der Technik oft als Bleichaktivatoren bezeichnet.

Beispiele für Peroxysäuren, die für die Verwendung in dieser Erfindung bevorzugt sind, umfassen die Peroxydodecandisäure (DPDA), das Nonylamid der Peroxybernsteinsäure (NAPSA), das Nonylamid der Peroxyadipinsäure (NAPAA) und Decyldiperoxybernsteinsäure (DDPSA). Die Peroxysäure ist vorzugsweise in einem löslichen Granulat enthalten, entsprechend der Methode aus US-4,374,035. Ein bevorzugtes Bleichgranulat enthält, in Gewichtsprozenten, 1 % bis 50 % einer exotherm löslichen Verbindung, wie beispielsweise Borsäure; 1 % bis 25 % eines mit der Peroxysäure verträglichen oberflächenaktiven Wirkstoffes, wie beispielsweise C13LAS; 0,1 % bis 10 % eines oder mehrerer Chelatstabilisatoren, wie beispielsweise Natriumpyrophosphat; und 10 % bis 70 % eines wasserlöslichen Salzes, wie beispielsweise Natriumsulfat.

Das peroxysäurehaltige Bleichmittel wird in Mengen verwendet, die eine Menge von verfügbarem Sauerstoff zwischen etwa 0,1 % bis etwa 10 %, vorzugsweise zwischen etwa 0,5 % bis etwa 5 %, insbesondere von etwa 1 % bis 4 % ergeben. Die Prozentangaben beziehen sich auf das Gesamtgewicht der Reinigungsmittelzusammensetzung.

Geeignete Mengen des peroxysäurehaltigen Bleichmittels, bezogen auf eine Einheitsdosis den erfindungsgemäßen Waschmittelzusammensetzungen, wie sie für eine typische Waschflotte verwendet wird, die etwa 65 Liter Wasser von 15 bis 60°C umfasst, erzeugen zwischen etwa 1 ppm bis etwa 150 ppm verfügbaren Sauerstoffs, vorzugsweise zwischen etwa 2 ppm bis etwa 20 ppm verfügbaren Sauerstoffs. Die Waschflotte sollte einen pH-Wert zwischen 7 und 11 aufweisen, vorzugsweise zwischen 7,5 und 10,5, um ein hinreichendes Bleichergebnis zu erzielen. Es wird auf Spalte 6, Zeilen 1 bis 10 von US-4,374,035 verwiesen.

Alternativ dazu kann die Bleichmittelzusammensetzung einen geeigneten organischen Peroxysäurevorläufer enthalten, der eine der oben genannten Peroxysäuren erzeugt, wenn er in wässriger alkalischer Lösung mit Wasserstoffperoxid reagiert. Die Quelle des Wasserstoffperoxids kann jedes anorganische Peroxid sein, das in wässriger Lösung Wasserstoffperoxid freisetzt, wie etwa Natriumperborat (Monohydrat und Tetrahydrat) und Natriumpercarbonat.

An Bleichaktivatoren stehen zur Verfügung N,N,N',N'-Tetraacetylethylendiamin (TAED), Glucosepentaacetat (GPA), Xylosetetraacetat (TAX), Natrium-4-benzoyloxy-benzolsulfonat (SBOBS), Natriumtrimethylhexanoyloxybenzolsulfonat (STHOBS), Tetraacetylglucoluril (TAGU), Tetraacetylcyansäure (TACA), Di-N-acetyldimethylglyoxin (ADMG) und 1-Phenyl-3-acetylhydantoin (PAH), Nonanoylcaprolactamphenyl-sulfonatester (APES), Nonanoylphenylsulphonatester (NOPS), Nitrilotriacetat (NTA) und Ammoniumnitrile.

Die erfindungsgemäßen Wasch- und Reinigungsmittelzusammensetzungen können ein oder mehrere konventionelle Enzyme enthalten. Solche Enzyme sind z.B. Lipasen, Amylasen, Proteasen, Cellulasen. Pullinasen, Cutinasen, Peroxidasen. An Proteasen stehen zur Verfügung BLAP^{®}, Opticlean^{®}, Maxacal^{®}, Maxapem^{®}, Esperase^{®}, Savinase^{®}, Purafect^{®}, OxP und/oder Duraxym^{®}, an Amylasen Termamyl^{®}, Amylase-LT^{®}, Maxamyl^{®}, Duramyl^{®} und/oder Pruafect^{®} OxAm, an Lipasen, Lipolase^{®}, Lipomax^{®}, Lumafast^{®} und/oder Lipozym^{®}.
Ein bevorzugtes Enzym ist Cellulase. Die hierbei verwendete Cellulase kann aus Bakterien oder Pilzen gewonnen sein und soll einen optimalen pH-Bereich zwischen 5 und 9,5 aufweisen. Bevorzugte Cellulasen sind in WO-91/17 243 beschrieben.

Ebenfalls bevorzugte Enzyme sind Lipasen, die als fettspaltende Enzyme eine bessere Ablösung nativer Öle und Fette von angeschmutzten Geweben ermöglichen und so die erfindungsgemäßen Polyester in ihrer Wirkung unterstützen, wobei generell additive, wie auch synergistische Wirkungen erzielt werden können.

Die Enzyme können an Trägersubstanzen adsorbiert werden und/oder in Hüllsubstanzen eingebettet sein.

Bezogen auf das Gewicht der Wasch- und Reinigungsmittelzusammensetzungen, die die erfindungsgemäßen Polyester enthalten, beträgt der Anteil der Enzyme mindestens 0,001 Gew.-%, bevorzugt zwischen etwa 0,001 bis etwa 5 Gew.-%, insbesondere von etwa 0,001 bis etwa 1 Gew.-%, speziell von etwa 0,01 bis etwa 1 Gew.-%.

An Sequestriermittel stehen zu Verfügung Natriumtripolyphosphat (STPP), Ethylendiamintetraessigsäure (EDTA), salze, Nitrilotriessigsäure (NTA), Polyacrylat, Phosphonat, Oxalsäure, -salz, Zitronensäure, Zeolith, kondensierte Phosphate, Carbonate, Polycarbonate.

Als Vergrauungsinhibitoren kommen in Betracht Carboxymethylcellulose, Methylcellulose, Hydroxyalkylcellulose, Methylhydroxyethylcellulose, Methylhydroxypropylcellulose, Methylcarboxymethylcellulose und Polyvinylpyrrolidon.

Auch Farbübertragungsinhibitoren kommen in Betracht, beispielsweise Polyamin-N-oxide wie etwa Poly-(4-vinylpyridin-N-oxid), z.B. Chromabond S-400, Fa. ISP; Polyvinylpyrrolidon, z.B. Sokalan^{®} HP 50/ Fa. BASF und Copolymere von N-Vinylpyrrolidon mit N-Vinylimidazol und gegebenenfalls anderen Monomeren

Die Erfindung schließt Wasch- und Reinigungsmittel, enthaltend Farbfixiermittel als Wirksubstanzen ein, beispielsweise Farbfixiermittel, die erhalten werden durch Umsetzung von Diethylentriamin, Dicyandiamid und Amidoschwefelsäure, Aminen mit Epichlorhydrin, beispielsweise Dimethylaminopropylamin und Epichlorhydrin oder Dimethylamin und Epichlorhydrin oder Dicyandiamid, Formaldehyd und Ammoniumchlorid, oder Dicyandiamid, Ethylendiamin und Formaldehyd oder Cyanamid mit Aminen und Formaldehyd oder Polyaminen mit Cyanamiden und Amidoschwefelsäure oder Cyanamiden mit Aldehyden und Ammoniumsalzen, aber auch Polyamin-N-oxide wie etwa Poly-(4-vinylpyridin-N-oxid), z.B. Chromabond S-400, Fa. ISP; Polyvinylpyrrolidon, z.B. Sokalan^{®} HP 50/ Fa. BASF und Copolymere von N-Vinylpyrrolidon mit N-Vinylimidazol und gegebenenfalls anderen Monomeren.

Die erfindungsgemäßen Wasch- und Reinigungsmittel können Komplexbildner, beispielsweise Aminocarboxylate, wie Ethylendiamintetraacetat, N-Hydroxyethylethylendiamintriacetat, Nitrilotriacetat, Ethylendiamintetrapropionat, Triethylentetraaminhexaacetat, Diethylentriaminpentaacetat, Cyclohexandiamintetraacetat, Phosphonate, beispielsweise Azacycloheptandiphosphonat, Na-Salz, Pyrophosphate, Etidronsäure (1-Hydroxyethyliden-1,1-diphosphonsäure, 1-Hydroxyethyan-1,1-diphosphonsäure, Acetophosphonsäure) und ihre Salze, Aminophosphonate, wie Ethylendiamintetrakis (methylenphosphonat), Diethylentriaminpentakis(methylenphosphonat), Amintrimethylenphosphonsäure, Cyclodextrine, sowie polyfunktionell substituierte aromatische Komplexbildner, wie Dihydroxydisulfobenzol oder Ethylendiamindisuccinate enthalten.

Als optische Aufheller können eingesetzt werden cyclische Kohlenwasserstoffe wie Distyrylbenzole, Distyrylbiphenyle, Diphenylstilbene, Triazinylaminostilbene, Stilbenyl-2H-triazole, beispielsweise Stilbenzyl-2H-naphthol-[1,2-d]triazole und Bis(1,2,3-triazol-2-yl)stilbene, Benzoxazole, beispielsweise Stilbenylbenzoxazol und Bis(benzoxazol), Furane, Benzofurane und Benzimidazole, beispielsweise Bis(benzo[b]furan-2-yl)biphenly und cationische Benzimidazole, 1,3-Diphenyl-2-pyrazolin, Cumarin, Naphthalimide, 1,3,5-2-yl-Derivate, Methincyanin und Dibenzothiophen-5,5-oxid.

Bevorzugt sind anionische optische Aufheller, insbesondere sulfonierte Verbindungen.

Des weiteren kommen in Betracht Triazinylaminostilbene, Distyrylbiphenyle und Mischungen daraus, 2-(4-Styrylphenyl)-2H-naphtho[1,2-d]triazol, 4,4'-Bis-(1,2,3-triazol-2-yl)stilben, Aminocumarin, 4-Methyl-7-Ethylaminocumarin, 1,2-bis(benzimidazol-2-yl)ethylen, 1,3-Diphenylphrazolin, 2,5-Bis(benzooxazol-2-yl)thiophene, 2-Stryl-naphtho[1,2-d]oxazol, 2-(4-styryl-3-sulfophenyl)-2H-naphtho[1,2-d]triazol und 2-(Stilben-4-yl)-2H-naphthol[1,2-d]triazol

Die erfindungsgemäßen Waschmittel können optische Aufheller in Mengen von 0,001 Gew.-% bis 2 Gew.-%, bevorzugt 0,002 Gew.-% bis 0,8 Gew.-%, besonders bevorzugt 0,003 ew.-% bis 0,4 Gew.-% enthalten.

Als weich machende Komponenten werden quartäre Ammoniumsalze vom Typ 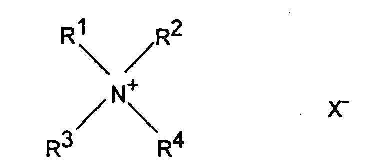 eingesetzt, worin
R¹ = C₈-C₂₄ n-, bzw. iso-Alkyl, bevorzugt C₁₀-C₁₈ n-Alkyl
R² = C₁-C₄-Alkyl, bevorzugt Methyl
R³ **=** R¹ oder R²
R⁴ = R² oder Hydroxyethyl oder Hydroxypropyl oder deren Oligomere
X- = Bromid, Chlorid, Jodid, Methosulfat, Acetat, Propionat, Lactat
sind.

Beispiele hierfür sind Distearyldimethylammoniumchlorid, Ditalgalkyldimethylammoniumchlorid, Ditalgalkylmethylhydroxypropylammoniumchlorid, Cetyltrimethylammoniumchlorid oder auch die entsprechenden Benzylderivate wie etwa Dodecyldimethylbenzylammoniumchlorid. Cyclische quartäre Ammoniumsalze, wie etwa Alkyl-Morpholinderivate können ebenfalls verwendet werden.

Darüber hinaus können neben den quartären Ammoniumverbindungen Imidazolinium-Verbindungen (1) und Imidazolinderivate (2) eingesetzt werden. 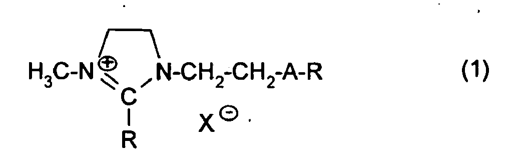 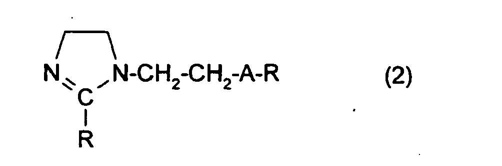 worin
R = C₈-C₂₄ n-, bzw. iso-Alkyl, bevorzugt C₁₀-C₁₈ n-Alkyl
X = Bromid, Chlorid, Jodid, Methosulfat
A = -NH-CO-, -CO-NH-, -O-CO-, -CO-O-
ist.

Eine besonders bevorzugte Verbindungsklasse sind die so genannten Esterquats. Es handelt sich hierbei um Umsetzungsprodukte von Alkanolaminen und Fettsäuren, die anschließend mit üblichen Alkylierungs- oder Hydroxyalkylierungsagenzien quaterniert werden.

Bevorzugt als Alkanolamine sind Verbindungen gemäß der Formel 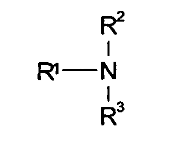 mit
R¹ = C₁-C₃ Hydroxyalkyl, bevorzugt Hydroxyethyl und
R², R³ = R¹ oder C₁-C₃ Alkyl, bevorzugt Methyl.

Besonders bevorzugt sind Triethanolamin und Methyldiethanolamin.

Weitere besonders bevorzugte Ausgangsprodukte für Esterquats sind Aminoglycerinderivate, wie z. B. Dimethylaminopropandiol.
Alkylierungs- bzw. Hydroxyalkylierungsagenzien sind Alkylhalogenide, bevorzugt Methylchlorid, Dimethylsulfat, Ethylenoxid und Propylenoxid.

Beispiele für Esterquats sind Verbindungen der Formeln: 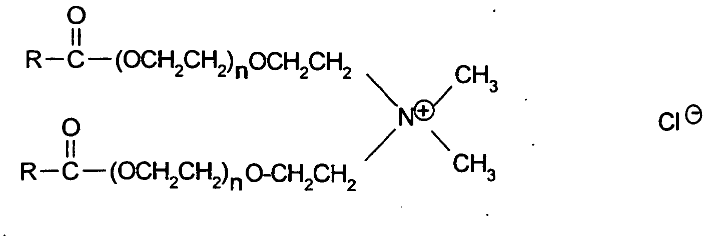 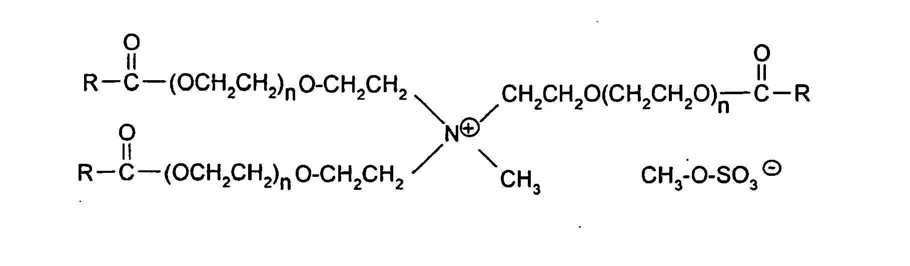 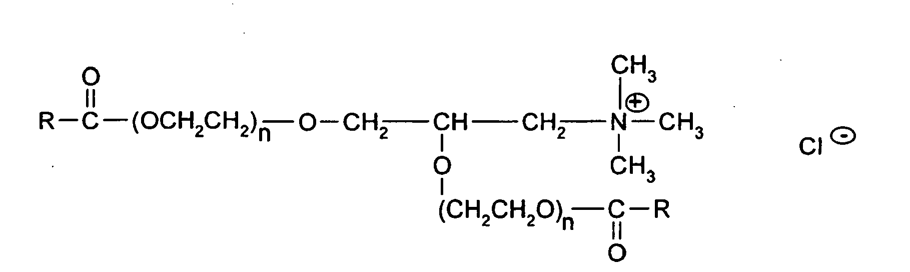 wobei R-C-O abgeleitet ist von C₈-C₂₄-Fettsäuren, die gesättigt oder ungesättigt sein können. Beispiele hierfür sind Capronsäure, Caprylsäure, hydrierte oder nicht oder nur teilweise hydrierte Talgfettsäuren, Stearinsäure, Ölsäure, Linolensäure, Behensäure, Palminstearinsäure, Myristinsäure und Elaidinsäure. n liegt im Bereich von 0 bis 10, vorzugsweise 0 bis 3, besonders bevorzugt 0 bis 1.

Weitere bevorzugte Wäscheweichspülerrohstoffe mit denen die erfindungsgemäßen Polyester kombiniert werden können sind Amido-Amine auf der Basis von beispielsweise Dialkyltriaminen und langkettigen Fettsäuren, sowie deren Oxethylate bzw. quaternierten Varianten. Diese Verbindungen besitzen folgende Struktur: 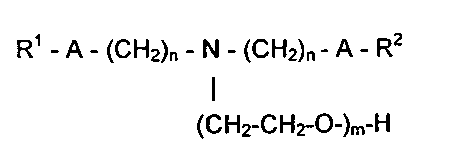 worin
- R¹ und R²: unabhängig voneinander C₈ - C₂₄ n- bzw. iso-Alkyl, bevorzugt C₁₀-C₁₈ n-Alkyl,
- A: -CO-NH- oder -NH-CO-,
- n: 1 - 3, bevorzugt 2,
- m: 1 - 5, bevorzugt 2 - 4
bedeuten.

Durch Quaternierung der tertiären Aminogruppe kann zusätzlich ein Rest R³, welcher C₁-C₄-Alkyl, bevorzugt Methyl, sein kann und ein Gegenion X, welches Chlorid, Bromid, Jodid oder Methylsulfat sein kann, eingeführt werden. Amidoaminooxethylate bzw. deren quaternierten Folgeprodukte werden unter den Handelsnamen ^{®}Varisoft 510, ^{®}Varisoft 512, ^{®}Rewopal V 3340 und ^{®}Rewoquat W 222 LM angeboten.

Die bevorzugten Anwendungskonzentrationen der erfindungsgemäß eingesetzten Polyester in den Weichspülerformulierungen entsprechen denen, die für Waschmittelformulierungen genannt sind.

Die erfindungsgemäßen Wasch- und Reinigungsmittel enthalten vorzugsweise Farbstoffe und Duft- bzw. Parfümstoffe.

Als Farbstoffe bevorzugt sind Acid Red 18 (CI 16255), Acid Red 26, Acid Red 27, Acid Red 33, Acid Red 51, Acid Red 87, Acid Red 88, Acid Red 92, Acid Red 95, Acid Red 249 (CI )18134, Acid Red 52 (CI45100), Acid Violet 126, Acid Violet 48, Acid Violet 54, Acid Yellow 1, Acid Yellow 3 (CI 47005), Acid Yellow 11, Acid Yellow 23 (CI 19140), Acid Yellow 3, Direct Blue 199 (CI 74190), Direct Yellow 28 (CI 19555), Food Blue 2 (CI 42090), Food Blue 5:2 (CI 42051:2), Food Red 7 (CI 16255), Food Yellow 13 (CI 47005), Food Yellow 3 (CI 15985), Food Yellow 4 (CI 19140), Reactive Green 12, Solvent Green 7 (CI 59040).

Besonders bevorzugte Farbstoffe sind wasserlösliche Säurefarbstoffe, beispielsweise Food Yellow 13 (Acid Yellow 3, CI 47005), Food Yellow 4 (Acid Yellow 23, CI 19140), , Food Red 7 (Acid Red 18, CI 16255), Food Blue 2 (Acid Blue 9, CI 42090), Food Blue 5 (Acid Blue 3, CI 42051), Acid Red 249 (CI 18134), Acid Red 52 (CI 45100), Acid Violet 126, Acid Violet 48, Acid Blue 80 (CI 61585), Acid Blue 182, Acid Blue 182, Acid Green 25 (CI 61570), Acid Green 81.

Ebenso bevorzugt eingesetzt werden auch wasserlösliche Direkt-Farbstoffe, beispielsweise Direct Yellow 28 (CI 19555), Direct Blue 199 (CI 74190) und wasserlösliche Reaktiv-Farbstoffe, beispielsweise Reactive Green 12, sowie die Farbstoffe Food Yellow 3 (CI 15985), Acid Yellow 184,

Ebenso bevorzugt eingesetzt werden wässrige Dispersionen folgender PigmentFarbstoffe, wobei die Konzentration der zum Färben von Lösungen oder Dispersionen eingesetzten Farbstoffdispersionen im Bereich von 0,1 Gew.-% bis 50.Gew.-%, bevorzugt 1 Gew.-% bis 45 Gew.-%, besonders bevorzugt 5 Gew.-% bis 40 Gew.-% und außerordentlich bevorzugt zwischen 10 Gew.-% und 35 Gew.-% liegt. Dem Fachmann ist bekannt, dass die wässrigen Pigment-Dispersionen neben den Pigmenten, Dispergiermittel und gegebenenfalls weitere Hilfsstoffe, beispielsweise Biocide enthalten.
An Pigment-Farbstoffen in Betracht kommen Pigment Black 7 (CI 77266), Pigment Blue 15 (CI 74160), Pigment Blue 15:1 (CI 74160), Pigment Blue 15:3 (CI 74160), Pigment Green 7 (CI 74260), Pigment Orange 5, Pigment Red 112 (CI 12370), Pigment Red 112 (CI 12370), Pigment Red 122 (CI 73915), Pigment Red 179 (CI 71130), Pigment Red 184 (CI 12487), Pigment Red 188 (CI 12467), Pigment Red 4(CI 12085), Pigment Red 5 (CI 12490), Pigment Red 9, Pigment Violet 23 (CI 51319), Pigment Yellow 1 (CI 11680), Pigment Yellow 13 (CI 21100), Pigment Yellow 154, Pigment Yellow 3 (CI 11710), Pigment Yellow 74, Pigment Yellow 83(CI 21108), Pigment Yellow 97.
In bevorzugten Ausführungsformen werden folgende Pigmentfarbstoffe in Form von Dispersionen eingesetzt: Pigment Yellow 1 (CI 11680), Pigment Yellow 3 (CI 11710), Pigment Red 112 (CI 12370), Pigment Red 5 (CI 12490), Pigment Red 181 (CI 73360), Pigment Violet 23 (CI 51319), Pigment Blue 15:1 (CI 74160), Pigment Green 7 (CI 74260), Pigment Black 7 (CI 77266),

In ebenfalls bevorzugten Ausführungsformen werden wasserlösliche Polymerfarbstoffe, beispielsweise Liquitint RTM, Liquitint Blue HP.RTM., Liquitint Blue 65.RTM., Liquitint Patent Blue.RTM., Liquitint Royal Blue.RTM., Liquitint Experimental Yellow 8949-43.RTM., Liquitint Green HMC.RTM.,Liquitint Yellow II.RTM. und Mischungen daraus eingesetzt.

Als Duft- bzw. Parfümstoffe können einzelne Riechstoffverbindungen, z.B. die synthetischen Produkte vom Typ der Ester, Ether, Aldehyde, Ketone, Alkohole und Kohlenwasserstoffe verwendet werden. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethyl-methylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 C-Atomen, Citral, Citronellal, Citronellyloxyacetaldehyd, Hydroxycitronellal, Lilial und Bourgeonal, zu den Ketonen z.B. die Ionone, alpha-Isomethylionon und Methyl-cedrylketon, zu den Alkoholen Anethol, Citronellol, Eugenol, Geranion, Linalool, Phenylethylalkohol und Terpineol, zu den Kohlenwasserstoffen gehören hauptsächlich die Terpene und Balsame. Bevorzugt werden Mischungen verschiedener Riechstoffe verwendet, die gemeinsam eine ansprechende Duftnote erzeugen.

Parfümöle können auch natürliche Riechstoffgemische enthalten, wie sie aus pflanzlichen oder tierischen Quellen zugänglich sind, z.B. Pinien-, Citrus-, Jasmin-, Lilien-, Rosen-, oder Ylang-Ylang-Öl. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl und Wacholderbeerenöl.

Bevorzugt eingesetzt werden Lösungen oder Emulsionen der oben genannten Duftstoffe und Parfümöle, die nach gängigen Methoden hergestellt werden können.

Die nachfolgenden Beispiele sollen den Gegenstand der Erfindung näher erläutern.

### Beispiel 1: Polyester 1

In einem 2-I Vierhalskolben mit KPG-Rührer, Innenthermometer, Gaseinleitungsrohr und Destillierbrücke wurden 281,5 g 1,2-Propandiol, 229,6 g Ethylenglykol, 250 g PEG-250-monomethylether, 970,9 g Terephthalsäuredimethylester und 236,98 g 5-Sulfoisophthalsäuredimethylester-Na-Salz vorgelegt und das Reaktionsgemisch anschließend durch Einleitung von N₂ inertisiert. Im Gegenstrom wurde anschließend 1 g Titantetraisopropylat und 0,8 g Natriumacetat zur Reaktionsmischung hinzugegeben. Das Gemisch wurde am Ölbad langsam aufgeheizt, wobei ab etwa 120-150°C Innentemperatur die festen Komponenten anfingen aufzuschmelzen. Unter Rühren wurde nun innerhalb von 30 min auf 190°C erhitzt. Bei ca. 173°C begann die Umesterung bzw. Destillation. Im Laufe von 2 h Stunden wurde die Innentemperatur auf 210°C gesteigert, bis die gemäß Stöchiometrie erforderliche Kondensatmenge erreicht war. Danach wurde die Ölbadtemperatur auf ca. 240-250°C gesteigert und der Innendruck innerhalb von 30 Minuten auf bestes Ölpumpenvakuum abgesenkt. Während der dreistündigen Vakuumphase wurde die Kondensation durch Abdestillation der überschüssigen Alkoholmenge vervollständigt. Während dieser Zeit erhöhte sich die Innentemperatur der Polyesterschmelze langsam bis auf etwa 220°C am Ende der Reaktion. Anschließend wurde mit N₂ belüftet und die Schmelze auf Bleche ausgetragen.

### Beispiel 2: Polyester 2

In einem 3-I Vierhalskolben mit KPG-Rührer, Innenthermometer, Gaseinleitungsrohr und Destillierbrücke wurden 418,5 g 1,2-Propandiol, 279,3 g Ethylenglykol, 212,4 g Tetraethylenglykolmonomethylether, 1359,3 g Terephthalsäuredimethylester und 296,22 g 5-Sulfoisophthalsäuredimethylester-Na-Salz und 250 g Polyethylenglykol 250 vorgelegt und das Reaktionsgemisch anschließend durch Einleitung von N₂ inertisiert. Im Gegenstrom wurde anschließend 1,5 g Natriummethylat und 0,5 g Natriumcarbonat zur Reaktionsmischung hinzugegeben. Das Gemisch wurde am Ölbad langsam aufgeheizt, wobei ab etwa 120-150°C Innentemperatur die festen Komponenten anfingen aufzuschmelzen. Unter Rühren wurde nun innerhalb von 30 min auf 190°C erhitzt. Bei ca. 173°C begann die Umesterung bzw. Destillation. Im Laufe von 2 h Stunden wurde die Innentemperatur auf 210°C gesteigert, bis die gemäß Stöchiometrie erforderliche Kondensatmenge erreicht war. Danach wurde die Ölbadtemperatur auf ca. 240-250°C gesteigert und der Innendruck innerhalb von 30 Minuten auf bestes Ölpumpenvakuum abgesenkt. Während der dreistündigen Vakuumphase wurde die Kondensation durch Abdestillation der überschüssigen Alkoholmenge vervollständigt. Während dieser Zeit erhöhte sich die Innentemperatur der Polyesterschmelze langsam bis auf etwa 220°C am Ende der Reaktion. Anschließend wurde mit N₂ belüftet und die Schmelze auf Bleche ausgetragen.

### Beispiel 3: Polyester 3

In einem 3-I Vierhalskolben mit KPG-Rührer, Innenthermometer, Gaseinleitungsrohr und Destillierbrücke wurden 281,5 g 1,2-Propandiol, 223,4 g Ethylenglykol, 202 g Triethylenglykolmonomethylether, 582,5 g Terephthalsäuredimethylester und 296,22 g 5-Sulfoisophthalsäuredimethylester-Na-Salz vorgelegt und das Reaktionsgemisch anschließend durch Einleitung von N₂ inertisiert. Im Gegenstrom wurde anschließend 1,02g Titantetraisopropylat und 0,8 g Natriumacetat zur Reaktionsmischung hinzugegeben. Das Gemisch wurde am Ölbad langsam aufgeheizt, wobei ab etwa 120-150°C Innentemperatur die festen Komponenten anfingen aufzuschmelzen. Unter Rühren wird nun innerhalb von 45 min auf 195°C erhitzt. Bei ca. 173°C begann die Umesterung bzw. Destillation. Im Laufe von 3 h Stunden wurde die Innentemperatur auf 210°C gesteigert, bis die gemäß Stöchiometrie erforderliche Kondensatmenge erreicht war. Danach wurde die Ölbadtemperatur auf ca. 240-255°C gesteigert und der Innendruck innerhalb von 60 Minuten auf < 20 mbar abgesenkt. Während der vierstündigen Vakuumphase wurde die Kondensation durch Abdestillation der überschüssigen Alkoholmenge vervollständigt. Während dieser Zeit erhöht sich die Innentemperatur der Polyesterschmelze langsam bis auf 225°C am Ende der Reaktion. Anschließend wurde mit N₂ belüftet und die Schmelze auf Bleche ausgetragen.

### Beispiel 4: Polyester 4

### Reaktionsführung gemäß Beispiel 2

| | |
|---|---|
| Komponenten: | 281,5 g 1,2-Propandiol |
| | 223,4 g Ethylenglykol |
| | 776,7 g Terephthalsäuredimethylester |
| | 355,5 g 5-Sulfoisophthalsäuredimethylester-Na-Salz |
| | 295,5 g Talgfettalkohol mit 8 Einheiten Ethylenoxid (Genapol T080) |
| | 1,00 g Titantetraisopropylat |
| | 0,8 g Natriumacetat |

### Beispiel 5: Polyester 5

### Reaktionsführung gemäß Beispiel 3

| | |
|---|---|
| Komponenten: | 620,6 g Ethylenglykol |
| | 970,9 g Terephthalsäuredimethylester |
| | 444,3 g 5-Sulfoisophthalsäuredimethylester-Na-Salz |
| | 162 g Triethylenglykolmonobutylether |
| | 1,00 g Titantetraisopropylat |
| | 0,8 g Natriumacetat |

### Beispiel 6: Polyester 6

### Reaktionsführung gemäß Beispiel 1

| | |
|---|---|
| Komponenten: | 152,2 g 1,2-Propandiol |
| | 124,1 g Ethylenglykol |
| | 388,3 g Terephthalsäuredimethylester |
| | 177,7 g 5-Sulfoisophthalsäure-Li-Salz |
| | 100 g Laurylalkohol mit 7 einheiten Ethylenoxid (Genapol LA 070) |
| | 1,00 g Titantetraisopropylat |

### Beispiel 7: Polyester 7

### Reaktionsführung gemäß Beispiel 1

| | |
|---|---|
| Komponenten: | 422,3 g 1,2-Propandiol |
| | 335,1 g Ethylenglykol |
| | 873,8 g Terephthalsäuredimethylester |
| | 177,7 g 5-Sulfoisophthalsäure-Na-Salz |
| | 100 g Triethylenglykolmonomethylether |
| | 50 g Polyethylenglykol 500 |
| | 5.0 g Polyethylenglykol 1500 |
| | 1,00 g Titantetraisopropylat |

### Beispiel 8: Polyester 8

### Reaktionsführung gemäß Beispiel 1

| | |
|---|---|
| Komponenten: | 380,5 g 1,2-Propandiol |
| | 186,2 g Ethylenglykol |
| | 873,8 g Terephthalsäuredimethylester |
| | 444,3 g 5-Sulfoisophthalsäure-Na-Salz |
| | 125 g Tripropylenglykolmonomethylether |
| | 150 g Ethylenoxid-Propylenoxid Copolymer (Genapol PF 20) |
| | 1,00 g Titantetraisopropylat |

### Beispiel 9: Polyester, partial endgruppenverschlossen mit Sulfongruppen

Reaktionsführung und Komponenten analog Beispiel 3, wobei 50 Mol-% an Triethylenglykolmonomethylether gegen das Natriumsalz der Isethionsäure ersetzt wurden.

Die erfindungsgemäßen Polyester wurden auf ihre Hygroskopizität und auf ihren Soil Release Effekt hin mit Soil Release Polymeren des Standes der Technik verglichen.

### Soil Release Test:

Die erfindungsgemäßen anionischen Soil Release Polyester wurden mit dem "Dirty Motor Oil Test" auf ihren Soil Release Effekt hin geprüft.
Dazu wurden die Polymere in einer Konzentration von 1 % (Wirkstoff), bezogen auf die verwendeten Testwaschmittel, den jeweiligen Waschlaugen zugesetzt. Mit diesen Waschlaugen wurde weißes Polyestergewebe Testex PES 730 (Testfabrics Inc., USA) vorgewaschen. Die so vorbehandelten Gewebe wurden getrocknet und anschließend mit Motorenaltöl angeschmutzt. Nach einer Einwirkzeit von einer Stunde wurden die angeschmutzten Gewebeprüflinge unter den gleichen Waschbedingungen mit den jeweiligen Testwaschmitteln unter Zusatz der erfindungsgemäßen Polymere nachgewaschen. Anschließend wurde die Remission der Testgewebe gemessen.
Zum Vergleich wurde der Dirty Motor Oil Test mit den Testwaschmitteln ohne Soil Release Polymere sowie mit einem Zusatz kommerzieller Soil Release Polymere, die den Stand der Technik repräsentieren, durchgeführt.
Als Testwaschmittel wurden für den Dirty Motor Oil Test die Standardwaschpulver IEC-A und IEC-B der Wäschereiforschung Krefeld, ein Colorwaschpulver und ein Flüssigwaschmittel verwendet (Tabellen 1 bis 4):

**Tabelle 1: IEC-A Waschpulver (phosphatfrei, mit Bleichmittel)**

| | |
|---|---|
| Alkylbenzolsulfonat, Na-Salz | 8,8 % |
| C12-18-Alkoholethoxylat mit 7 EO | 4,7 % |
| Seife | 3,2 % |
| Schauminhibitor DC2-4248S, Dow Corning | 3,9 % |
| Zeolith 4A | 28,3 % |
| Soda | 11,6 % |
| Polycarboxylat (Sokalan^{®} CP5) | 2,4 % |
| Natriumsilikat | 3,0 % |
| Carboxymethylcellulose | 1,2 % |
| Phosphonat (Dequest 2066) | 2,8 % |
| Optischer Aufheller | 0,2 % |
| Natriumsulfat | 6,5 % |
| Protease Savinase 8.0, Novo Nordisk | 0,4 % |
| TAED | 5,0 % |
| Natriumpercarbonat | 18,0 % |

**Tabelle 2: IEC-B Waschpulver (phosphathaltig, ohne Bleichmittel)**

| | |
|---|---|
| Alkylbenzolsulfonat, Na-Salz | 8,0 % |
| C12-18-Alcoholethoxylate mit 14 EO | 2,9 % |
| Seife | 3,5 % |
| Natriumtripolyphosphat | 43,8 % |
| Natriumsilikat | 7,5 % |
| Magnesiumsilikat | 1,9 % |
| Carboxymethylcellulose | 1,2% |
| EDTA | 0,2 % |
| Optischer Aufheller | 0,2 % |
| Natriumsulfat | 21,0 % |
| Wasser | 9,8 % |

**Tabelle 3: Colorwaschpulver (phosphatfrei, ohne Bleichmittel)**

| | |
|---|---|
| Alkylbenzolsulfonat, Na-Salz | 11,5 % |
| C12-18-Alkoholethoxylat mit 7 EO | 6,0 % |
| Seife | 4,5 % |
| Schauminhibitor DC2-4248S, Dow Corning | 5,0 % |
| Zeolith 4A | 37,0% |
| Soda | 15,0 % |
| Polycarboxylat (Sokalan CP5) | 3,0 % |
| Natriumsilikat | 4,0 % |
| Carboxymethylcellulose | 1,6 % |
| Phosphonat (Dequest 2066) | 2,0 % |
| Protease | 0,5 % |
| Polyvinylpyrrolidon | 0,5 % |
| Natriumsulfat | 9,4 % |

**Tabelle 4: Flüssigwaschmittel**

| | |
|---|---|
| Genapol OA-080 | 12,0 % |
| Kokosfettsäure | 14,0 % |
| Kaliumhydroxid (85%ig) | 2,6 % |
| Triethanolamin | 2,0 % |
| 1,2 Propylenglykol | 5,0 % |
| Wasser | 42,4 % |
| tri-Natriumcitrat-2-hydrat | 5,0 % |
| Lineares Alkylbenzolsulfonat, Na-Salz | 10,0 % |
| Hydroxyethandiphosphonsäure (HEDP) | 4,0 % |
| Ethanol | 3,0 % |

Der Dirty Motor Oil Test wurde gemäß den in Tabelle 5 angegebenen Waschbedingungen durchgeführt:

**Tabelle 5: Waschbedingungen**

| Waschmaschine: | Linitest |
|---|---|
| Wasserhärte: | 15°dH |
| Flottenverhältnis | 1 : 40 |
| Waschtemperatur: | 40°C |
| Waschzeit: | 30 Min. |
| Waschmittelkonzentration: | 6 g/l |

Die folgenden kommerziellen Soil Release Polymere wurden zum Vergleich mitgeprüft (Tabelle 6).

**Tabelle 6: Kommerzielle Soil Release Polymere als Vergleichsbeispiele**

| | |
|---|---|
| Vergleichsbeispiel 1: | ^{®}Repel-O-Tex SRP 4 (Rhodia): |
| Vergleichsbeispiel 2: | ^{®}Repel-O-Tex SRP 6 (Rhodia): |
| Vergleichsbeispiel 3: | ^{®}Marloquest SL (Sasol): |
| Vergleichsbeispiel 4: | ^{®}Sokalan SR 100 (BASF). |

Die folgenden Testresultate wurden mit dem Soil Release Test erhalten (Tabellen 7 bis 9).

**Tabelle 7: Soil Release Effekt der erfindungsgemäßen Soil Release Polyester im Vergleich zu Soil Release Polyestern des Standes der Technik in dem Waschpulver IEC-A gemäß Tabelle 1.**

| | Remission (%) |
|---|---|
| IEC-A ohne Zusatz | 15.6 |
| + 1 % Soil Release Polymer: | |
| Vergleichsbeispiel 1 | 16,2 |
| Vergleichsbeispiel 2 | 18,7 |
| Vergleichsbeispiel 3 | 15,5 |
| Vergleichsbeispiel 4 | 14,8 |
| Polyester gemäß Beispiel 3 | 62,7 |

**Tabelle 8: Soil Release Effekt der erfindungsgemäßen Soil Release Polyester im Vergleich zu Soil Release Polyestern des Standes der Technik in dem Waschpulver IEC-B gemäß Tabelle 2.**

| | Remission (%) |
|---|---|
| IEC-B ohne Zusatz | 15.6 |
| + 1 % Soil Release Polymer: | |
| Vergleichsbeispiel 1 | 15,2 |
| Vergleichsbeispiel 2 | 15,5 |
| Vergleichsbeispiel 3 | 15,3 |
| Vergleichsbeispiel 4 | 15,4 |
| Polyester gemäß Beispiel 3 | 65,3 |

**Tabelle 9: Soil Release Effekt der erfindungsgemäßen Soil Release Polyester im Vergleich zu Soil Release Polyestern des Standes der Technik in dem Colorwaschpulver gemäß Tabelle 3.**

| | Remission (%) |
|---|---|
| Colorwaschpulver ohne Zusatz | 16,1 |
| + 1 % Soil Release Polymer: | |
| Vergleichsbeispiel 2 | 17,2 |
| Vergleichsbeispiel 3 | 16,3 |
| Polyester gemäß Beispiel 3 | 35,8 |

**Tabelle 10: Soil Release Effekt der erfindungsgemäßen Soil Release Polyester im Vergleich zu Soil Release Polyestern des Standes der Technik in dem Flüssigwaschmittel gemäß Tabelle 4.**

| Primärwaschvermögen: |
|---|
| Die erfindungsgemäßen Soil Release Polymere wurden ferner mit einer Mehrfachwäsche von Testschmutzgeweben auf ihr Primärwaschvermögen hin untersucht. |

Dazu wurde Polyestertestschmutzgewebe wfk 20C und wfk 30C (Wäschereiforschungs-anstalt Krefeld) viermal mit den Testwaschmitteln gemäß der Tabelle 1 bzw. Tabelle 2 und einem Zusatz von je 1 % (WS) der Polymere gewaschen. Nach jeder Wäsche wurden die Remissionswerte (Weißgrade) bestimmt.
Die Waschbedingungen entsprechen denen in Tabelle 5. Als Vergleich dienten Soil Release Polymere des Standes der Technik. Es resultierten die folgenden Ergebnisse (Tabellen 11 bis 13).

**Tabelle 10: Primärwaschvermögen in IEC-A an Polyester/Baumwolle WFK 20 C**

| Waschmittelformulierung | Remission (%) abhängig von den Waschzyklen | | | |
|---|---|---|---|---|
| | 1 x | 2x | 3x | 4x |
| IEC-A ohne Zusatz | 44,6 | 47,6 | 48,9 | 50,5 |
| +1 % Soil Release Polymer: | | | | |
| Vergleichsbeispiel 2 | 45,0 | 49,7 | 52,5 | 54,8 |
| Vergleichsbeispiel 4 | 44,7 | 47,2 | 49,1 | 50,3 |
| Polyester gemäß Beispiel 3 | 46,1 | 53,9 | 59,7 | 64,9 |

**Tabelle 11: Primärwaschvermögen in IEC-A an Polyester WFK 30 C**

| | 1 x | 2x | 3x | 4x |
|---|---|---|---|---|
| IEC-A ohne Zusatz | 39,6 | 42,4 | 43,8 | 44,8 |
| +1 % Soil Release Polymer: | | | | |
| Vergleichsbeispiel 2 | 40,0 | 43,3 | 45,1 | 46,4 |
| Vergleichsbeispiel 4 | 41,0 | 44,1 | 45,8 | 46,9 |
| Polyester gemäß Beispiel 3 | 42,6 | 51,0 | 57,5 | 61,3 |

**Tabelle 12: Primärwaschvermögen in IEC-B an Polyester/Baumwolle WFK 20 C**

| | 1 x | 2x | 3x | 4x |
|---|---|---|---|---|
| IEC-B ohne Zusatz | 44,1 | 47,6 | 49,0 | 50,3 |
| +1 % Soil Release Polymer: | | | | |
| Vergleichsbeispiel 2 | 46,3 | 50,5 | 52,8 | 54,7 |
| Vergleichsbeispiel 4 | 45,3 | 49,2 | 50,5 | 52,7 |
| Polyester gemäß Beispiel 3 | 46,4 | 58,3 | 66,6 | 73,4 |

**Tabelle 13: Primärwaschvermögen in IEC-B an Polyester WFK 30 C**

| | 1 x | 2 x | 3 x | 4 x |
|---|---|---|---|---|
| IEC-B ohne Zusatz | 44,0 | 46,5 | 47,9 | 48,8 |
| +1 % Soil Release Polymer: | | | | |
| Vergleichsbeispiel 2 | 45,0 | 47,6 | 49,3 | 49,9 |
| Vergleichsbeispiel 4 | 44,6 | 47,3 | 48,8 | 49,5 |
| Polyester gemäß Beispiel 3 | 44,6 | 52,8 | 58,7 | 61,4 |

Die erfindungsgemäßen Polyester wurden auf ihre Hygroskopizität hin mit Soil Release Polymeren des Standes der Technik verglichen.

**Tabelle 14: Hygroskopizität eines erfindungsgemäßen Copolymers im Vergleich zu anderen anionischen soil release Polymeren Offene Lagerung bei 25°C und 65 % Luftfeuchtigkeit; gemessen wurde die Aufnahme von Wasser g H₂O/pro kg SRP**

| SRP | 30 Min | 60 Min | 90 Min | 120 Min |
|---|---|---|---|---|
| Polyester 13 | 1 | 4 | 5 | 5 |
| Polyester 9 | 20 | 30 | 40 | 55 |
| SRA 200 | 30 | 60 | 78 | 92 |

Das Ergebnis zeigt, dass der erfindungsgemäße Polyester (Polyester 3) eine deutlich geringere Hygroskopizität aufweist, als analoge Polyester mit sulfonhaltigen Endgruppen (Poyester 9 und SRA 200).

Chemische Bezeichnung der eingesetzten Handelsprodukte

| | |
|---|---|
| Repel-O-Tex SRP 4, Rhodia, | Ethylenglykol-Polyethylenglykol Terephthalsäure-Copolymer, Rest Natriumsulfat und Natriumaluminiumsilikat |
| | |
| Repel-O-Tex SRP 6, Rhodia, | Ethylenglykol-Polyethylenglykol Terephthalsäure-Copolymer, Rest Natriumsulfat und Natriumaluminiumsilikat |
| | |
| Marloquest SL, Sasol Sokalan SR 100, BASF | 25 % nichtionisches Polykondensat auf 75 % Zeolith A |
| | |
| SRA 200 Clariant | Ethylenglykol-Polyethylenglykol-Terephthalsäure-Isethionsäure-Na-Salz Copolymer |
| | |
| Schauminhibitor DC2-4248S | Dow Coming, Polysiloxan |

## Patentansprüche

1. Polyester bestehend aus Struktureinheiten 1 bis 3 bzw. 1 bis 4 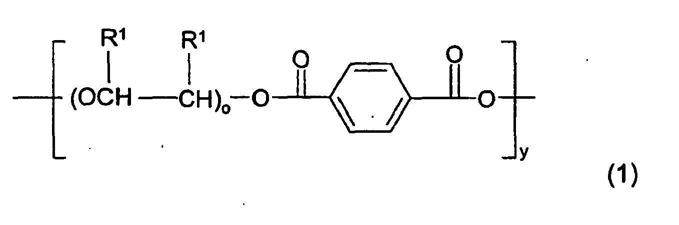 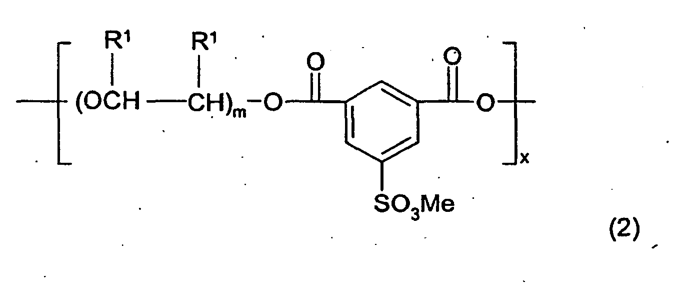 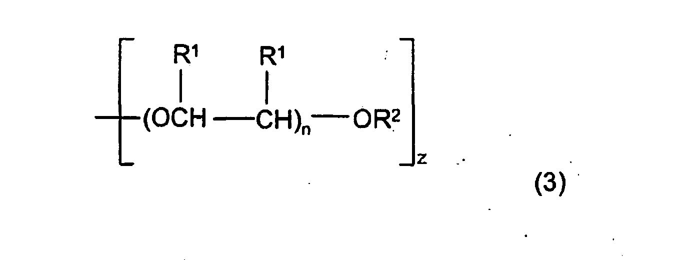 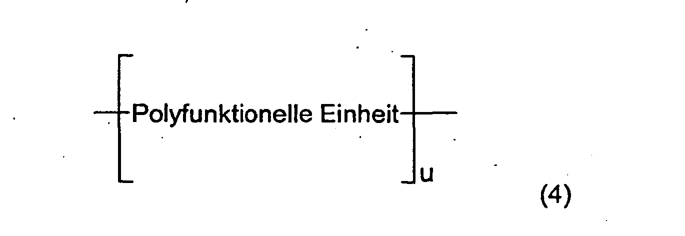 wobei
R¹ voneinander unabhängig für H oder für eine (C₁-C₁₈) n- oder iso-Alkylgruppe, bevorzugt Methyl, steht,
R² für eine lineare oder verzweigte (C₁-C₃₀)-Alkylgruppe oder für eine lineare oder verzweigte (C₂-C₃₀)-Alkenylgruppe, für eine Cycloalkylgruppe mit 5 bis 9 Kohlenstoffatomen, für eine (C₆-C₃₀) Arylgruppe- oder für eine (C₆-C₅₀) Arylalkylgruppe steht
m und o stehen unabhängig voneinander für eine Zahl von 1 bis 200,
n steht für eine Zahl von 1 bis 5,
x, y und z stehen unabhängig voneinander für Zahlen von 1 bis 50, mit der Maßgabe, dass x + y ≥ 2 und z > 0 sein müssen,
u steht für eine Zahl von 0 bis 5, bevorzugt 0 bis 0,5 und besonders bevorzugt von 0 bis 0,25 und
Me bedeutet Li⁺, Na⁺, K⁺, Mg⁺⁺/2, Ca⁺⁺/2, Al⁺⁺⁺/3, NH₄⁺, ein Monoalkylammonium-, Dialkylammonium-, Trialkylammonium- und/oder Tetraalkylammoniumion bedeutet, wobei es sich bei den Alkylsubstituenten der Ammoniumionen unabhängig voneinander um (C₁-C₂₂)-Alkylreste oder (C₂-C₁₀)-Hydroxyalkylreste handelt.

2. Polyester nach Anspruch 1, wobei R¹ für H und/oder für Methyl, R² für Methyl steht, o und m Zahlen von 1 bis 200 sind, n eine Zahl von 1 bis 5, x eine Zahl von 1 bis 30, y eine Zahl von 1 bis 25 und z eine Zahl von 0,05 bis 15 ist.

3. Polyester nach Anspruch 1 oder 2, wobei o und m Zahlen von 1 bis 20 sind und n eine Zahl von 1 bis 5 ist.

4. Polyester nach Anspruch 1 oder 2, wobei o, m und n eine Zahl von 1 bis 5 ist.

5. Polyester nach Anspruch 1 oder 2, wobei x eine Zahl von 2 bis 15 ist.

6. Polyester nach Anspruch 1 oder 2, wobei x eine Zahl von 3 bis 10 ist.

7. Polyester nach Anspruch 1 oder 2, wobei y eine Zahl von 1 bis 10 ist.

8. Polyester nach Anspruch 1 oder 2, wobei y eine Zahl von 1 bis 5 ist.

9. Polyester nach Anspruch 1 oder 2, wobei z eine Zahl von 0,1 bis 10 ist.

10. Polyester nach Anspruch 1 oder 2, wobei z eine Zahl von 0,25 bis 3 ist.

11. Polyester nach Anspruch 1 oder 2, wobei u für die Zahl 0 steht.

12. Polyester nach Anspruch 1 mit einem Erweichungspunkt oberhalb 40°C.

13. Polyester nach Anspruch 1 mit einem Erweichungspunkt zwischen 50 und 200°C.

14. Polyester nach Anspruch 1 mit einem Erweichungspunkt zwischen 80 und 150°C.

15. Polyester nach Anspruch 1 mit einem Erweichungspunkt zwischen 100 und 120°C.

16. Wasch- und Reinigungsmittel enthaltend einen Polyester nach Anspruch 1.

## Claims

1. A polyester consisting of structural units 1 to 3 or 1 to 4 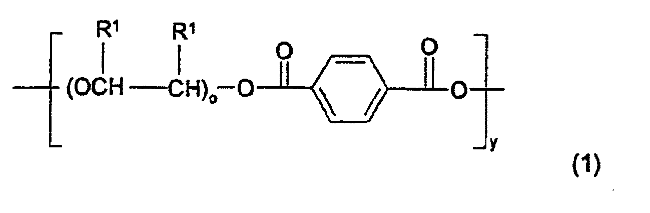 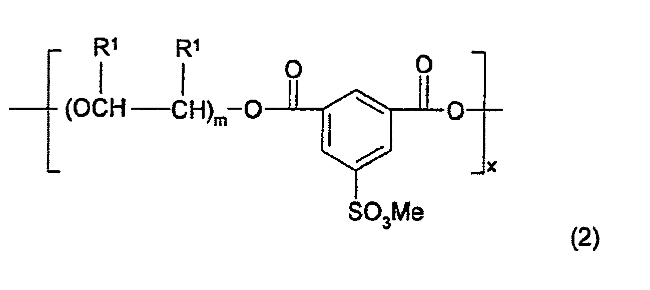 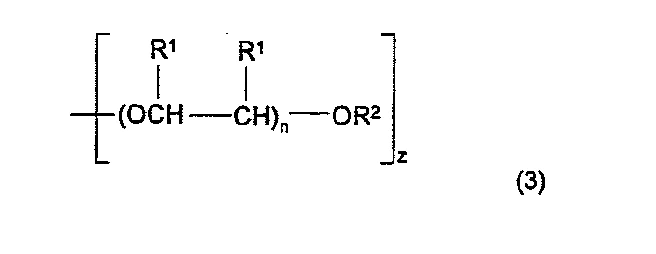 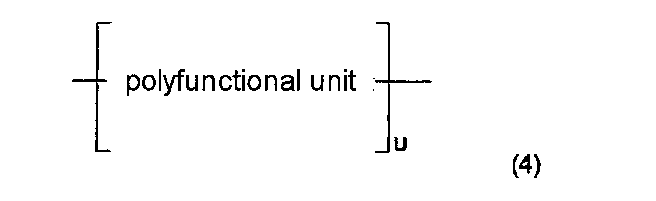 where
R¹, independently of the others, is H or a (C₁-C₁₈) n- or isoalkyl group, preferably methyl,
R² is a linear or branched (C₁-C₃₀)-alkyl group or a linear or branched (C₂-C₃₀)-alkenyl group, a cycloalkyl group having 5 to 9 carbon atoms, a (C₆-C₃₀) aryl group or a (C₆-C₅₀) arylalkyl group,
m and o, independently of one another, are a number from 1 to 200,
n is a number from 1 to 5,
x, y and z, independently of one another, are numbers from 1 to 50, with the proviso that x + y must be ≥ 2 and z must be > 0,
u is a number from 0 to 5, preferably 0 to 0.5 and particularly preferably from 0 to 0.25 and
Me is Li⁺, Na⁺, K⁺, Mg⁺⁺/2, Ca⁺⁺/2, Al⁺⁺⁺/3, NH₄⁺, a monoalkylammonium ion, dialkylammonium ion, trialkylammonium ion and/or tetraalkylammonium ion, where the alkyl substituents of the ammonium ions are, independently of one another, (C₁-C₂₂)-alkyl radicals or (C₂-C₁₀)-hydroxyalkyl radicals.

2. The polyester as claimed in claim 1, where R¹ is H and/or methyl, R² is methyl, o and m are numbers from 1 to 200, n is a number from 1 to 5, x is a number from 1 to 30, y is a number from 1 to 25 and z is a number from 0.05 to 15.

3. The polyester as claimed in claim 1 or 2, where o and m are numbers from 1 to 20 and n is a number from 1 to 5.

4. The polyester as claimed in claim 1 or 2, where o, m and n are a number from 1 to 5.

5. The polyester as claimed in claim 1 or 2, where x is a number from 2 to 15.

6. The polyester as claimed in claim 1 or 2, where x is a number from 3 to 10.

7. The polyester as claimed in claim 1 or 2, where y is a number from 1 to 10.

8. The polyester as claimed in claim 1 or 2, where y is a number from 1 to 5.

9. The polyester as claimed in claim 1 or 2, where z is a number from 0.1 to 10.

10. The polyester as claimed in claim 1 or 2, where z is a number from 0.25 to 3.

11. The polyester as claimed in claim 1 or 2, where u is the number 0.

12. The polyester as claimed in claim 1 with a softening point above 40°C.

13. The polyester as claimed in claim 1 with a softening point between 50 and 200°C.

14. The polyester as claimed in claim 1 with a softening point between 80 and 150°C.

15. The polyester as claimed in claim 1 with a softening point between 100 and 120°C.

16. A detergent or cleaner comprising a polyester as claimed in claim 1.

## Revendications

1. Polyester constitué par les unités de structure 1 à 3 ou, selon le cas, 1 à 4 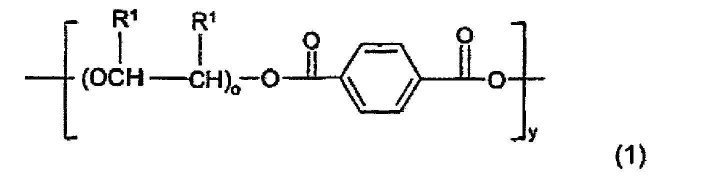 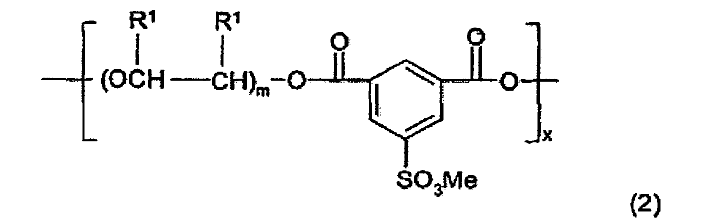 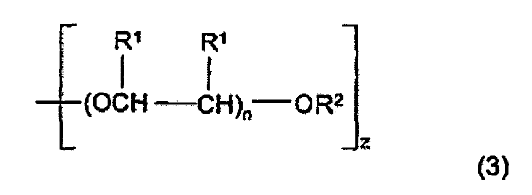 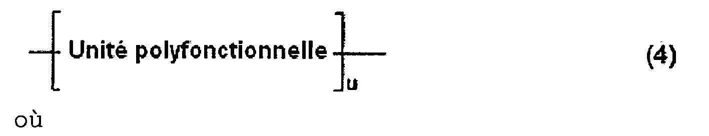
R¹ représente, indépendamment l'un de l'autre, H ou un groupe n-alkyle ou isoalkyle en (C₁-C₁₈), de préférence méthyle,
R² représente un groupe (C₁-C₃₀)-alkyle linéaire ou ramifié ou un groupe (C₂-C₃₀)-alcényle linéaire ou ramifié, un groupe cycloalkyle comprenant 5 à 9 atomes de carbone, un groupe (C₆-C₃₀)aryle ou un groupe (C₆-C₅₀)-arylalkyle,
m et o représentent, indépendamment l'un de l'autre, un nombre de 1 à 200,
n représente un nombre de 1 à 5,
x, y et z représentent, indépendamment l'un de l'autre, des nombres de 1 à 50, à condition que x + y ≥ 2 et z > 0,
u représente un nombre de 0 à 5, de préférence 0 à 0,5 et de manière particulièrement préférée de 0 à 0,25, et
Me signifie Li⁺, Na⁺, K⁺, Mg⁺⁺/2, Ca⁺⁺/2, Al⁺⁺⁺/3, NH4⁺, un ion de monoalkylammonium, de dialkylammonium, de trialkylammonium et/ou de tétraalkylammonium, où il s'agit, pour les substituants alkyle des ions d'ammonium, indépendamment l'un de l'autre, de radicaux (C₁-C₂₂)-alkyle ou (C₂-C₁₀)-hydroxyalkyle.

2. Polyester selon la revendication 1, où R¹ représente H et/ou méthyle, R² représente méthyle, o et m représentent des nombres de 1 à 200, n représente un nombre de 1 à 5, x représente un nombre de 1 à 30, y représente un nombre de 1 à 25 et z représente un nombre de 0,05 à 15.

3. Polyester selon la revendication 1 ou 2, où o et m représentent des nombres de 1 à 20 et n représente un nombre de 1 à 5.

4. Polyester selon la revendication 1 ou 2, où o, m et n représentent un nombre de 1 à 5.

5. Polyester selon la revendication 1 ou 2, où x représente un nombre de 2 à 15.

6. Polyester selon la revendication 1 ou 2, où x représente un nombre de 3 à 10.

7. Polyester selon la revendication 1 ou 2, où y représente un nombre de 1 à 10.

8. Polyester selon la revendication 1 ou 2, où y représente un nombre de 1 à 5.

9. Polyester selon la revendication 1 ou 2, où z représente un nombre de 0,1 à 10.

10. Polyester selon la revendication 1 ou 2, où z représente un nombre de 0,25 à 3.

11. Polyester selon la revendication 1 ou 2, où u représente le nombre 0.

12. Polyester selon la revendication 1 présentant un point de ramollissement supérieur à 40°C.

13. Polyester selon la revendication 1 présentant un point de ramollissement entre 50 et 200°C.

14. Polyester selon la revendication 1 présentant un point de ramollissement entre 80 et 150°C.

15. Polyester selon la revendication 1 présentant un point de ramollissement entre 100 et 120°C.

16. Agent de lavage et de nettoyage contenant un polyester selon la revendication 1.
